# NEUE EUROPÄISCHE PATENTSCHRIFT

(11) **EP 0 592 654 B2**
(45) Veröffentlichungstag und Bekanntmachung des Hinweises auf die Entscheidung über den Einspruch: **07.11.2001**
(45) Hinweis auf die Patenterteilung: 03.03.1999
(21) Anmeldenummer: 93911785.9
(22) Anmeldetag: 29.04.1993
(51) Int. Cl.: G01N 1/28

(54) **VORRICHTUNG ZUR VERDAMPFUNGSBEHANDLUNG VON VORZUGSWEISE FLÜSSIGEN STOFFEN, INSBESONDERE REAGENZSTOFFEN, ODER ZUM AUFBEREITEN ODER ANALYSIEREN VON PROBENMATERIAL**
DEVICE FOR EVAPORATING PREFERABLY LIQUID SUBSTANCES, IN PARTICULAR REAGENTS, OR FOR PREPARING OR ANALYZING SAMPLED MATERIALS
DISPOSITIF POUR TRAITER PAR EVAPORATION DES SUBSTANCES DE PREFERANCE LIQUIDES, NOTAMMENT DES SUBSTANCE REACTIVES, OU BIEN POUR PREPARER OU ANALYSER DES PRELEVEMENTS

(30) Priorität: 30.04.1992 DE 4214392; 14.07.1992 DE 4223116
(43) Veröffentlichungstag der Anmeldung: 20.04.1994
(73) Patentinhaber: MLS MIKROWELLEN-LABOR-SYSTEME GmbH, D-88299 Leutkirch (DE)
(72) Erfinder: LAUTENSCHLÄGER, Werner, D-7970 Leutkirch (DE)
(74) Vertreter: Schmidt-Evers, Jürgen, Dipl.-Ing.
(86) Internationale Anmeldenummer: EP9301037
(87) Internationale Veröffentlichungsnummer: WO9322650

(56) Entgegenhaltungen:
- EP-A- 0 156 742
- EP-A- 0 335 020
- EP-A- 0 455 513
- EP-A- 0 467 625
- US-A- 4 877 624
- H.M. Kingston (editor) "Introduction to Microwave Sample Preparation", American Chemical Society, Washington D.C., 1988, ISBN 0-8412-1450-6

## Beschreibung

Es ist insbesondere in der analytischen Chemie üblich, die Verdampfung eines Stoffes, insbesondere eines Reagenzstoffes wie z.B. eines flüssigen Lösungsmittels, zum Trennen vorgegebener Bestandteile des Stoffes auszunutzen.

Hierzu wird der Stoff in einem Behälter erhitzt, um eine beschleunigte Verdampfung herbeizuführen. Aus den Restbestandteilen des Stoffes lassen sich dann z.B. unter Berücksichtigung des oder der Gewichte bestimmte Rückschlüsse ziehen.

Aufgrund der Trennwirkung, die bei der Verdampfung von verdampfungsfähigen Anteilen eines Stoffes stattfindet, läßt sich durch die Verdampfung ein Stoff auch in vorteilhafter Weise in bestimmte Bestandteile trennen oder auch von bestimmten Bestandteilen reinigen. Die Erfindung bezieht sich somit auch auf den Anwendungsbereich der Destillation.

Eine Verdampfung und/oder Aufbereitung kann bei Unterdruck oder Überdruck im Behälter stattfinden.

Zur Beschleunigung der Verdampfung und/oder Aufbereitung wird der zu verdampfende Stoff erwärmt, was in der Regel mit einer Druckerhöhung im Behälter verbunden ist.

In der DE-OS 38 18 697 sowie in der US-A-4 877 624 ist ein Heizgerät zum Erhitzen und Aufbereiten von Probenmaterial in wenigstens einem Behälter bei Überdruck beschrieben, wobei bei einer vorbeschriebenen Druckerhöhung im Behälter die entstehenden Gase bei Überschreitung eines bestimmten Druckes durch ein Druckbegrenzungsventil des Behälters entweichen, in den geschlossenen Heizraum gelangen und von dort mittels einer Absaugvorrichtung abgesaugt werden können. Es ist auch bereits vorgeschlagen worden, die entstehenden Dämpfe bzw. Gase mittels einer unmittelbar an den Behälter angeschlossenen Rohrleitung abzuziehen und ggf. analytisch auszuwerten.

Bei den vorbeschriebenen Verdampfungsmaßnahmen kann der Stoff sich in einer bestimmten Menge im Behälter befinden oder er kann mittels einer Stoff-Zuführungsleitung und einer Dampf-Abführungsleitung kontinuierlich zugeführt und/oder als Dampf abgeführt werden. In vielen Fällen der analytischen Chemie ist es jedoch üblich; den Stoff in einer bestimmten Menge in den Behälter einzugeben, z.B. nach Einwägung, und den bei der Behandlung entstehenden Dampf bzw. das Gas mittels einer Dampf-Abführungsleitung abzuführen.

In allen vorbeschriebenen Fällen bedarf es einer öfteren Handhabung des Behälters, um z.B. den Stoff einzufüllen oder Behandlungsrückstände zu entnehmen. Einer angestrebten einfacheren und schnellen Handhabung steht die Leitungsverbindung des Behälters jedoch entgegen und zwar insbesondere in solchen Fällen, bei denen der wenigstens eine Behälter während der Erhitzung im zugehörigen Gerät gedreht oder hin und her geschwenkt wird. wie es bei dem vorbeschriebenen, aus der DE-OS 38 18 697 entnehmbaren Heizgerät der Fall ist. Bei bekannten Ausgestaltungen muß vor der Entnahme des Behälters oder nach dessen Einstellung im Heizgerät die vorhandene Leitungsverbindung gesondert geöffnet bzw. geschlossen werden, was die Handhabung erschwert. Außerdem ist die Leitungsführung insbesondere bei einem drehenden Halter für den wenigstens einen Behälter problematisch.

Aus der EP 467 625 A ist eine Vorrichtung zum Aufbereiten von Probenmaterial bekannt, die Behälter bestehend aus einem Topf und einem Deckel aufnehmen kann. Ein Behälter wird dabei mit einer Signalleitung versehen, die aus dem Inneren eines Mikrowellen-Heizraums herausgeführt ist und eine Schleifringverbindung aufweist.

Gemäß einem weiteren Ausführungsbeispiel dieser Druckschrift kann die elektrische Signalleitung durch einen Schlauch ersetzt werden, der den Druck im Behälter zu einem Drucksensor führt. Dieser Schlauch kann eine Drehverbindung aufweisen.

Aus der EP 455 513 A ist es bekannt, einen Behälter, der in einen Halter zur Drehung in einem Mikrowellen-Heizraum angeordnet ist, mit einem außerhalb des Heizraums angeordneten Druckmesser zu verbinden.

Der Erfindung liegt zugrunde, eine Vorrichtung der eingangs angegebenen Art so auszugestalten, daß eine handhabungsfreundliche und schnelle Bereitstellung bzw. Entnahme von Behältern in bzw. aus dem Heizgerät möglich ist. Dabei soll bei einer Drehung eines Halters für mehere Behälter eine Kontinuierliche Zuführung und/oder Abführung ermöglicht sein.

Diese Aufgabe wird durch die Merkmale des Anspruches 1 gelöst.

Die erfindungsgemäße Lösung eignet sich vorzüglich für einen drehenden oder hin- und her-, z.B. 360°C, schwenkbaren Halter für mehrere Behälter. Bei einem solchen Halter bedarf es einer Drehverbindung für die Leitung, so daß trotz Drehung des Halters eine kontinuierliche Zuführung und/oder Abführung durch die Leitung möglich ist. Der Halter ist dazu eingerichtet, mehrere Behälter aufzunehmen, wobei die Leitung sich vorzugsweise im Bereich der Drehverbindung zu den vorhandenen Stellplätzen für die Behälter verzweigt und in der Anzahl der Stellplätze vorhandenen Leitungsverbindungen vorgesehen sind.

Gemäß einer Weiterbildung läßt sich die Leitungsverbindung zu und/oder von den Behältern durch das Einschieben der Behälter in ihre Standposition im Halter selbsttätig herstellen und durch die Entnahme der Behälter selbsttätig trennen. Es braucht somit keine besondere Verschraubung oder eine besondere Bewegung zum Schließen oder zum Öffnen der Leitungsverbindung gehandhabt oder ausgeführt zu werden, was handhabungsunfreundlich und zeitraubend wäre und außerdem eine erhöhte Aufmerksamkeit der Bedienungsperson erfordern würde.

Vorzugsweise ist dem Halter eine Führung für die Bewegungsrichtung der Behälter inbesondere beim Einstellen zugeordnet, so daß die Bedienungsperson wenig Aufmerksamkeit darauf richten muß, ob sich der

Behälter beim Einstellen bzw. Einschieben in den Halter in der richtigen Position befindet. Die Führung führt die Behälter zwangsläufig in seine vorbestimmte Stellung, wobei durch einen Bewegungsanschlag auch die Endstellung des Behälters in einfacher Weise definiert werden kann.

Im Rahmen der Erfindung ist es möglich, daß die Achse der Leitungsverbindung sich quer zur etwa horizontalen Einschub- bzw. Entnahmebewegung erstreckt oder sich in Längsrichtung bzw. parallel zur horizontalen Einschub- bzw. Entnahmebewegung erstreckt. Im ersten Fall erfolgt eine Parallelverschiebung der Achsenabschnitte der Leitungsverbindung, bis sie miteinander fluchten. Im zweiten Fall kann die erfindungsgemäße Leitungsverbindung durch eine Steckverbindung im Umfangsbereich der Behälter gebildet sein mit einem im Halter und einem jeden Behälter zugeordneten Steckverbindungsteil, die muffenartig miteinander zusammenwirken. in beiden Fällen wird die Einstell- bzw. Entnahmebewegung der Behälter zum selbsttätigen Schließen bzw. Trennen der Leitungsverbindung ausgenutzt.

In beiden vorgenannten Fällen läßt sich eine Abdichtung der Leitungsverbindung in einfacher Weise verwirklichen. im ersten Fall können horizontale, aneinanderliegende Paßflächen zwischen dem Halter und dem Behälter oder eine zwischen einer nach unten weisenden Fläche des Halters und einer nach oben weisenden Fläche der Behälter angeordnete, die Trennstelle der Leitungsverbindung ringförmig umgebende Ringdichtung angeordnet sein.

Es ist weiter möglich, daß die Leitungsverbindung durch einen sich im Halter erstreckenden Leitungsabschnitt und einen sich im Deckel der Behälter erstrekkenden Leitungsabschnitt. Bei Verwendung eines topfförmigen Behälters kann der Deckel des Behälters durch den Halter gebildet sein, wobei der vorzugsweise vertikale, im so gebildeten hafterseitigen Deckelteil verlaufende Verbindungsleitungsabschnitt vom Hohlraum eines topfförmigen Behälters ausgeht bzw. in diesen mündet.

Die Erfindung bezieht sich auch auf vorteilhafte Behälter-Ausgestaltungen in verschiedenen Versionen. Eine Ausgestaltung besteht wie vorbeschrieben bereits darin, daß oberseitig offene topfförmige Behälter vorgesehen sind und ein diesen Behältern zugeordnetes Deckelteil dem Halter zugeordnet bzw. ein Teil des Halters ist.

Eine andere Behälter-Ausgestaltung bezieht sich darauf, die Behälter jeweils aus einem Behälteroberteil und einem Behälterunterteil zu bilden, wobei zur Aufnahme des Probenmaterials ein Sieb- oder Filterboden zwischen des Behälterteilen vorgesehen ist, wobei vorzugsweise der Hohlraum des Behälterunterteils mit Unterdruck beaufschlagbar ist.

Die Maßnahme, die Verdampfung beim Vorhandensein eines Unterdrucks stattfinden zu lassen, ist bei allen Ausführungsbeispielen von Vorteil, weil grundsätzlich der Siedepunkt des Reagenz- bzw. Lösungsmittels bei Unterdruck sinkt und deshalb nicht nur weniger Heizenergie, sondern auch bei niedrigeren Temperaturen gearbeitet werden kann, wodurch das Probenmaterial geschont werden kann oder wärmeempfindliches Material überhaupt behandelt werden kann. Hierdurch kann die Verdampfung sowohl grundsätzlich effektiver stattfinden als auch insbesondere dann effektiver stattfinden, wenn bei einem vorbeschriebenen zweiteiligen Behälter der Unterdruck an den Hohlraum des Behälterunterteils angelegt wird, während eine insbesondere mit dem Reagenz- oder Lösungsmittel getränkte Probe sich darüber befindet und ein durch die Absaugung erzeugter Luftstrom durch die Probe geführt wird.

Dabei ist es im Rahmen der Erfindung möglich, jeden Behälter direkt abzusaugen oder jeden Behälter in einem besonderen Unterdruckbehälter oder -raum im Heizraum anzuordnen, so daß jeweils nur der einen Behälter in geringem Abstand umgebende Unterdruckbehälter evakuiert zu werden braucht, was mit einem geringeren Leistungs- und Zeitaufwand möglich ist.

Ein weiterer Aspekt betrifft eine vorteilhafte Gas-Spüleinrichtung für die Behälter zum Abführen von Dämpfen oder dgl., wobei das Reagenz- oder Lösungsmittel vor dem Einschieben der Behälter in den Halter in die Behälter eingefüllt werden kann oder in der eingeschobenen Position im Halter durch eine Zuführungsvorrichtung vorzugsweise automatisch zugeführt werden kann. Im letzteren Fall ist es vorteilhaft, eine das Absaugen der Dämpfe ermöglichende Gas- oder Lufteinführung mit der Zuführung für das Reagenzmittel zu kombinieren. Dabei können Mittel vorgesehen sein, die es ermöglichen, die Gas- oder Lufteinführung auch dann zu ermöglichen, wenn keine Reagenzmittel zugeführt werden sollen, da in vielen Fällen nur eine stoßweise Zuführung des Reagenzmittels gewünscht ist. Beides erfolgt durch den Deckel der Behälter oder ein den Deckel bildendes Teil des Halters für die Behälter.

Es ist vorteilhaft, bei einer Absaugung der dampfförmigen Bestandteile in Behälten letzteren oder dem Heizraum ein Belüftungsventil zuzuordnen, durch das ein Gas oder Luft eingesaugt werden kann. Hierdurch läßt sich eine Spülwirkung und eine verbesserte Abführung der dampfförmigen Bestandteile erreichen. Bei der Verwendung eines Inertgases als Belüftungs- oder Spülgas, läßt sich auch ein Explosionsschutz für entzündliche Materialien in den Behälten erreichen.

Die Erfindung eignet sich sowohl für eine automatische als auch manuelle Einführung des Reagenz-bzw. Lösungsmittels in einen Behälter, wobei insbesondere bei einer automatischen Zuführung dies kontinuierlich oder auch einmalig vorzugsweise bei der Beschickung der Behälter erfolgen kann.

In allen Fällen besteht eine Forderung darin, zu erkennen, wann der Verdampfungsvorgang beendet ist. Auch hierfür werden Lösungen in Form eines Verfahrens und zugehörige Vorrichtungen vorgeschlagen. Zum einen wird vorgeschlagen, den Druck in einem Behälter oder in dessen Leitungen zu überwachen und bei einem Druckabfall über ein bestimmtes Maß oder bei einem Druckabfall, der innerhalb einer bestimmten Zeitspanne eine bestimmte Druckabfallgeschwindigkeit überschreitet, die vorhandene Heizung zu reduzieren oder abzuschalten. Alternativ oder zusätzlich kann zu diesem Zweck auch die Temperatur des Dampfes im oder am Behälter gemessen werden und bei einem Temperaturanstieg über ein bestimmtes Maß oder bei einem Temperaturanstieg oberhalb einer vorbestimmten Geschwindigkeit die Heizung reduziert oder abgeschaltet werden. Desweiteren bezieht sich die Erfindung auch auf Vorrichtungen zur Durchführung dieser Verfahren.

Ein weiterer Aspekt der Erfindung bezieht sich darauf, die Behälter, Teile der Behälter oder die Behälter umgebende Zusatzteile aus einem Material zu fertigen, das sich durch die Mikrowellenbestrahlung erwärmt und dadurch das Material in den Behältern erhitzt. Eine solche Ausgestaltung ist nicht nur deshalb vorteilhaft, weil mikrowellendurchlässiges Material behandelt werden kann, sondern auch deshalb, weil nach einem Reduzieren oder Abschalten der Mikrowellenbestrahlung eine weitere Erwärmung bzw. ein Warmhalten des Materials gewährleistet ist, so daß durch andernfalls erfolgende Abkühlung kein Dampfdruckanstieg oder ein Temperaturabfall auftreten könnte, was die Endpunktbestimmung verfälschen könnte.

Beim Verdampfen von vorzugsweise flüssigen Stoffen oder beim Aufbereiten bzw. Analysieren von Probenmaterial sind die Behälter einer beträchtlichen Temperatur ausgesetzt, die sich aufgrund der Erhitzung des Proben materials und/oder Behältermaterials durch die Mikrowellen und/oder evtl. auch einer chemischen Reaktion in jedem Behälter einstellt. Es können Temperaturen von etwa 200°C bis etwa 500°C und mehr entstehen. Bei hohen Temperaturen ergeben sich Festigkeitsprobleme bezüglich des Behälter- und/oder Haltermaterials insbesondere dann, wenn es aus resistentem Kunststoffmaterial besteht, wie vorzugsweise Polytetrafluoräthylen (PTFE-Teflon). Das Festigkeitsproblem wird dadurch vergrößert, daß bei einer bekannten, aus der bereits genannten DE-OS 38 18 697 entnehmbaren Vorrichtung der Deckel des Behälters gegen das Behälterunterteil vorgespannt wird. Bei einer hohen Arbeitstemperatur, nämlich dann, wenn die Festigkeit des Behälterwerkstoffes nachläßt, führt diese Vorspannung zu einer zusätzlichen Belastung des Behälters, wodurch Verformungen bzw. Beschädigungen und Funktionsstörungen entstehen. Weitere, der Erfindung zugrundeliegende Probleme bestehen somit in der hohen Arbeitstemperatur und daraus folgenden Festigkeitsproblemen für die Behälter und/oder den Halter. Letzteres Problem stellt sich insbesondere dann, wenn der Halter den Verschluß des Behälters gewährleistet, hauptsächlich dann, wenn mit Überdruck gearbeitet wird.

Weitere Aspekte der Erfindung zur Lösung der vorgenannten Probleme bestehen zum einen darin, die auf die Behälter und/oder Halter einwirkende Temperatur und/oder die Belastung auf die Behälter und/oder den Halter zu senken. Ein Lösungsmerkmal für das zuerst genannte Problem besteht darin, den Heizraum mit Luft zu spülen und somit die Behälter und/oder Halter außen und/oder innen zu kühlen. Ein weiteres Lösungsmerkmal besteht darin, die Behälter am Halter in hängender Anordnung zu haltern. Hierdurch werden nicht nur die auf die Behälter wirkenden Belastungen wesentlich reduziert, sondern es wird auch die Außenkühlfläche der Behälter vergrößert, weil auch die Unterseite der Behälter gekühlt werden kann.

Hierzu ist zu bemerken, daß insbesondere unter der Mitwirkung eines Reagenzmittels im unteren Bereich der Behälter die Arbeitstemperatur am höchsten ist.

Die Erfindung bezieht sich auch auf eine Kühleinrichtung, mit der der der Halter und/oder die Behälter oder Teile davon gekühlt werden können. Die Gefahr einer thermischen Überbeanspruchung besteht insbesondere für die Behälter und zwar hauptsächlich für das Behälter-Unterteil, in dem sich das durch die Mikrowellen erhitzte Probenmaterial befindet. Dabei können die übrigen im Heizraum befindlichen Teile der Vorrichtung mitgekühlt werden oder es könnte auch nur der Halter gekühlt werden und zwar durch die Kühlluftströmung, die den Heizraum von dessen Kühllufteinlaß her durchquert.

Die erfindungsgemäße Ausgestaltung eignet sich insbesondere für Verdampfungs- und Aufbereitungsbehandlungen bei Überdruck. Insbesondere bei solchen Behandlungsmaßnahmen entstehen besonders hohe Temperaturen in den Behältern.

Die Erfindung eignet sich jedoch auch für solche Behandlungen von Material im Probenbehälter, bei denen mit Unterdruck gearbeitet wird und bei denen der Reaktionsraum der Behälter abgesaugt wird und gleichzeitig der Reaktionsraum belüftet wird zwecks möglichst vollständiger pneumatischer Spülung des Reaktionsraums. Hierbei erfolgt eine innere Kühlung des Behälters, wobei diese dann mit einer äußeren Kühlung kombiniert werden kann, wenn der Saugluftstrom vom inneren des Behälters zu dessen äußeren geleitet wird.

Die Erfindung bezieht sich auch auf Maßnahmen, die ein besseres Analyseergebnis ermöglichen. Das Analyseergebnis kann in vielen Fällen durch Kondensatbildung in den Behältern insbesondere nach Beendigung des Verdampfungs- oder Aufbereitungsvorgangs verfälscht werden. Ein Aspekt der Erfindung ist deshalb Kondensatbildung in den Behältern zu verhindern oder zu vermindern oder Maßnahmen vorzusehen, die verhindern, daß Kondensat zum für die Analyse vorgesehenen Probenrest gelangt. Die Kondensatbildung läßt sich dadurch verringern, daß im oberen Bereich der Behälter, d.h. an ihrem Deckel oder in ihren oberen Randbereich eine Erwärmung erzeugt wird, was sich durch die Anordnung von Werkstoffen ggf. an zusätzlichen Teilen erreichen läßt, die mikrowellenabsorbierend sind und somit sich im Betrieb durch die Mikrowelle erwärmen.

Eine, andere erfindungsgemäße Maßnahme besteht darin, in den Behältern wenigstens einen Aufnahmeraum für Kondensat vorzusehen, in den letzteres selbsttätig hineinfließt. Insbesondere dann, wenn ein Behälterunterteil ohne den Deckel aus dem Halter seitlich herausgezogen wird, wird evtl. am Deckel hängendes Kondensat abgestreift, wobei es zum Restprobenmaterial gelangt. In weiterer Ausgestaltung der Erfindung ist eine Umfangsrinne in jedem Behälter und zwar insbesondere an einem Aufsatzring, zur Aufnahme des Kondensats vorgesehen.

In den Unteransprüchen sind Merkmale enthalten, die zur Problemlösung beitragen, zu einfachen und praktischen und dabei kostengünstig herstellbaren Ausgestaltungen führen, die Handhabung, die Montage bzw. Demontage, die Abdichtung, den Wärmehaushalt und die Funktion verbessern und außerdem die Lebensdauer verlängern.

Nachfolgend werden die Erfindung und weitere durch sie erzielbare Vorteile anhand von bevorzugten Ausführungsbeispielen und einer Zeichnung näher erläutert. Es zeigt:
- Fig. 1: eine nicht zur Erfindung gehörende Vorrichtung zum Verdampfen von insbesondere flüssigen Stoffen, vorzugsweise Reagenzstoffen oder zum Aufbereiten bzw. Analysieren von Probenmaterial in mehreren wahlweise zu öffnenden und zu schließenden Behältern in vereinfachter perspektivischer Vorderansicht;
- Fig. 2: einem vertikalen Teilschnitt eines im Heizbereich der Vorrichtung angeordneten Halters für mehrere Behälter,
- Fig. 3: einen der Figur 2 entsprechenden vertikalen Teilschnitt in abgewandelter Ausgestaltung der Vorrichtung;
- Fig. 4 und 5: verschiedene Funktionszustände der Ausgestaltungen nach Fig. 2 oder 3;
- Fig. 6: eine erfindungsgemäße Vorrichtung in abgewandelter Ausgestaltung und in perspektivischer Frontansicht;
- Fig. 7: einen der Behälter der Vorrichtung nach Figur 6 in einer in die Vorrichtung eingestellten Position im vertikalen Schnitt;
- Fig. B: die in Figur 7 mit X gekennzeichnete Einzelheit in vergrößerter Darstellung;
- Fig. 9 bis 12: Einzelteile des mehrteiligen Behälters nach Figur 7 ebenfalls im Vertikalschnitt.
- Fig. 13 und 14: abgewandelte Ausgestaltungen der Vorrichtung der in der Figur 2 entsprechenden Schnittansichten;
- Fig. 15: ein Funktions-Schaubild, aus dem der Temperaturverlauf entnehmbar ist;
- Fig. 16: eine Einrichtung zum Messen der Dampftemperatur in schematischer Darstellung;
- Fig. 17: ein Funktions-Schaubild, aus dem der Temperaturverlauf entnehmbar ist:
- Fig. 19: einen vertikalen Teilschnitt durch einen Halter mit einem daran befestigten Behälter;
- Fig. 20: ein Halteelement des Halters in der Unteransicht;
- Fig. 21: einen vertikalen Teilschnitt des im Heizbereich der Vorrichtung angeordneten Halters für mehrere Behälter in weiter abgewandelter Ausgestaltung;
- Fig. 22: eine Lösungsmittel- und Gaszuführungseinrichtung gemäß Figur 21 in abgewandelter Ausgestaltung;
- Fig. 23: einen vertikalen Teilschnitt des im Heizbereich der Vorrichtung angeordneten Halters für mehrere Behälter in weiter abgewandelter Ausgestaltung;
- Fig. 24: eine erfindungsgemäße Vorrichtung mit einem Halter für Probenbehälter zum Aufschließen und Analysieren von Probenmaterial in perspektivischer Vorderansicht;
- Fig. 25: einen radialen vertikalen Teilschnitt durch den Halter im Bereich eines Standplatzes für einen Probenbehälter;
- Fig. 26: ein Schutzgehäuse für den Halter bzw. die Probenbehälter in perspektivischer Ansicht.

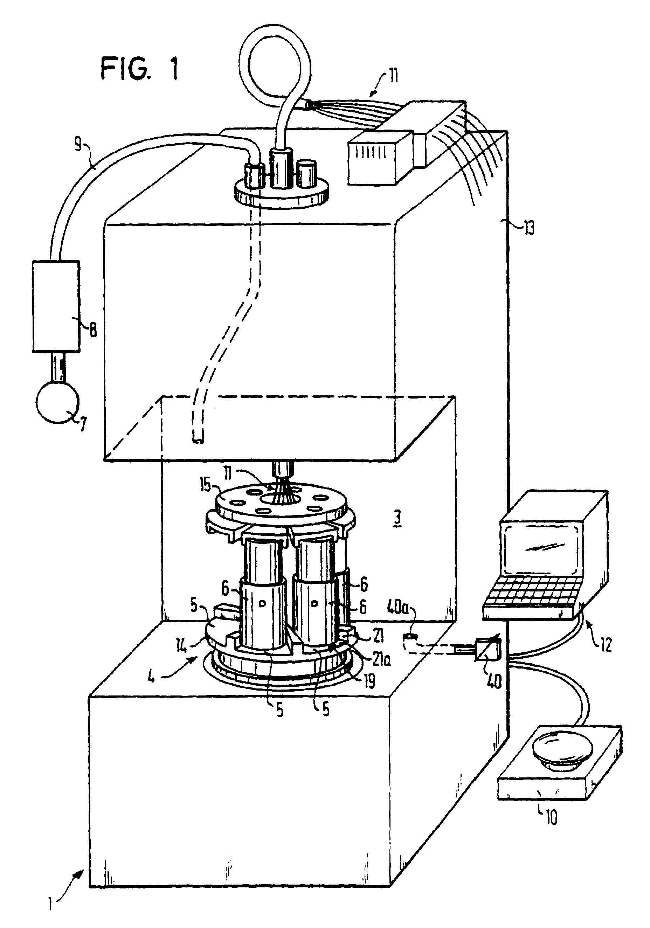

Vorab sei angemerkt, daß das Ausführungsbeispiel von Fig. 1 bis 5 nicht unter den Anspruch 1 fällt.

Die Hauptteile der Vorrichtung 1 sind ein vorzugsweise mit Mikrowelle wirksames Heizgerät 2 mit einem z.B. durch eine nicht dargestellte Tür verschließbaren Heizraum 3, ein darin angeordneter Halter 4 mit mehreren, vorzugsweise vier oder sechs Stellplätzen 5 für Behälter 6, eine Saugpumpe 7, ein Kondensations-Kühler 8, der in der zur Saugpumpe 7 führenden Saugleitung 9 angeordnet ist, mehrere Zuführungsleitungen 11 oder eine gemeinsame und in mehrere Zuführungsleitungen verzweigende Zuführungsleitung für ein Lösungsmittel und eine elektronische Steuereinrichtung 12, die vorzugsweise einen Computer aufweist und nach vorgegebenen oder eingebbaren Programmen zu arbeiten vermag, wobei der Steuereinrichtung 12 eine Tastatur und ein Display oder ein Bildschirm zur Angabe von Steuerungsdaten vorzugsweise zugeordnet ist. Außerdem ist der Vorrichtung 1 eine Waage 10 zugeordnet, die sich außerhalb des Heizraumes 3 befindet, wobei es sich vorzugsweise um eine elektronische Waage 10 handelt, die durch eine elektrische Steuerleitung mit der Steuereinrichtung 12 verbunden ist. letztere kann in die Vorrichtung integriert sein oder in das die Tastatur und den Bildschirm enthaltenden Gehäuse angeordnet sein.

Das Heizgerät 2 ist in ein quaderförmiges Gehäuse 13 integriert, von dessen Frontseite aus der Heizraum 3 in Form einer quaderförmigen Ausnehmung zugänglich und durch eine aus Vereinfachungsgründen nicht dargestellte Verschlußtür dicht verschließbar ist. Die Saugleitung 9 und die Zuführungsleitung 11 münden durch zugehörige Öffnungen in den Heizraum 3 ein. Der Halter 4 besteht aus mikrowellendurchlässigem Material, insbesondere Kunststoff wie Polypropylen und ist ein Drehteil mit einer unteren Drehplatte 14 und einer oberen Drehplatte 15, zwischen denen die Behälter 6 gehalten sind. Das Drehteil kann im Sinne einer fortlaufenden Rotation oder auch einer hin- und hergehenden Schwenkbewegung, vorzugsweise um etwa 360° angetrieben sein. Die Drehplatten 14,15 sind durch ein sich vertikal erstreckenden Verbindungsteil, hier ein Verbindungsrohr 17, fest miteinander verbunden, so daß sie das Verbindungsrohr 17 radial nach außen überragen und zwischen sich eine gemeinsame Ringausnehmung 18 oder einzelne Ausnehmungen zur Aufnahme der Behälter 6 bilden. Vorzugsweise ist an der Oberseite der unteren Drehplatte 14 im Bereich jedes Stellplatzes 5 eine Führung 19 für den Behälter 6 vorgesehen, die eine radial nach innen verlaufende Bewegungsführung beim Einsetzen des Behälters 6 von der Seite her zwischen die Drehplatten 14,15 vorgibt. Die Führung 19 kann durch eine Vertiefung 21 mit einer ebenen Grundfläche 21a gebildet sein, deren sich in Umfangsrichtung erstreckende Breite an die Breite des vorzugsweise zylindrischen Behälters 6 angepaßt ist.

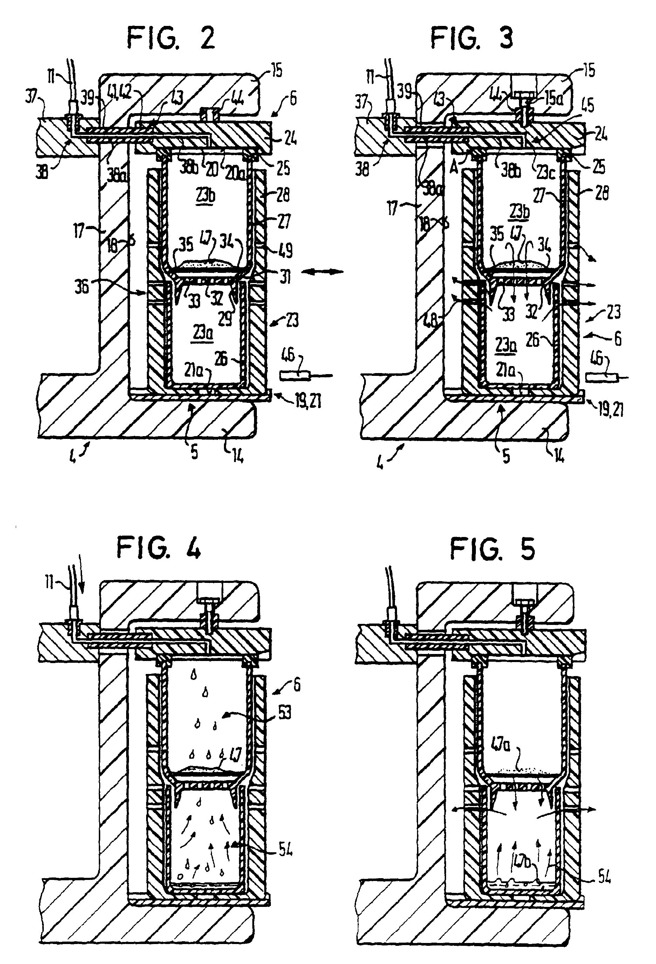

Wie inbesondere Figur 2 zeigt, bestehen die einander gleichen Behälter 6 jeweils aus einem Topfteil 23 und einem flachen Deckel 24, der auf dem oberen Rand bei Zwischenlage einer Ringdichtung 25 aufliegt und dabei den Rand des Topfes 23 geringfügig nach unten übergreifen kann, so daß er gegen seitliche Verschiebung gehalten ist. Die unterseitige Ausdehnung 20 mit einer ebenen Anlagefläche 20 a für den Rand des Topfes 23 umgreift letzteren.

Der Topf 23 des Behälters 6 besteht aus mehreren, im vorliegenden Falle drei Teilen, nämlich einem Topfunterteil 26, einem an seinem oberen Rand abgedichteten Topfoberteil 27 und einem topfförmigen Mantel 28, der sich nur bis zum Topfoberteil 27 oder sich auch im wesentlichen über die gesamte Höhe des Behälters 6 erstrecken kann und die Topfteile 26,27 mit Bewegungsspiel aufnimmt. Vorzugsweise ist am unteren Ende des Topfoberteiles 27 ein Zentrieransatz 29 angeordnet, der in das Topfunterteil 26 einfaßt, wobei das Topfoberteil 27 mit einer Schulter 31 auf dem oberen Rand des Topfunterteiles 26 steht. Der Boden 32 des Topfoberteils 27 weist eine Mehrzahl Durchtrittslöcher 33 auf oder er ist im Sinne eines Siebes perforiert. Dem Topfoberteil 27 ist auch noch eine Filterplatte 34, vorzugsweise ein sog. Glas- oder Papierfilter zugeordnet, deren Form und Größe so ausgebildet ist, daß es auf einer Innenschulter 35 des Topfoberteiles 27 aufgelegt werden kann. Dabei ist es vorteilhaft, eine Stufe oder eine Schräge im Bereich der Innenschulter 35 vorzusehen, so daß in der aufgelegten Position der Filterplatte 34 ein Abstand zwischen letzerer und dem Boden32 vorhanden ist. Beim vorliegenden Ausführungsbeispiel sind die Einzelteile des Behälters 6 im horizontalen Querschnitt rund bzw. zylindrisch ausgebildet. Um die Handhabbarkeit beim Einsetzen und Herausnehmen der Topfteile 26,27 in bzw. aus dem Mantel 28 zu erleichtern, kann letzterer durch eine horizontale Teilungsfuge 36 in ein Mantelunterteil und ein Manteloberteil geteilt sein. Der Behälter 6 besteht aus mikrowellendurchlässigem Material, insbesondere korrosionsbeständigem Kunststoff, vorzugsweise Polytetrafluoräthylen (PTFE-Teflon) oder Tetrafluormisch-polymerisat (TFM) oder dergleichen. Die Topfteile 26, 27 oder ein einziges Topfteil können auch aus Glas, Quarz oder Keramik bestehen. Die Einzelteile des Behälters 6 und vorzugsweise der Mantel 28 können auch aus mikrowellen-teildurchlässigem Material gebildet sein, so daß sie sich bei der Bestrahlung durch den nicht dargestellten Mikrowellen-Generator erwärmen, wodurch Kondensation verhindert wird und eine Nachwärmung nach dem Abschalten der Mikrowelle erreicht wird. Als Material hierzu eignet sich vorzugsweise ein Kunststoff, in den Materialteile, wie Partikel aus mikrowellenabsorbierendem Material, insbesondere Graphit, eingemischt oder legiert sind, und der unter der Bezeichnung Weflon an sich bekannt ist.

Die Zuführungsleitungen 11 erstrecken sich von oben zum Zentrum des Halters 4 in den Heizraum 3 und sie sind mittels Anschlußarmaturen an eine Anschlußplatte 37 angeschlossen, die in das Verbindungsrohr 17 so eingesetzt ist, daß ihre Umfangsfläche an der Innenumfangsfläche des Verbindungsrohres 17 anliegt. In der Anschlußplatte 37 verläuft für jede Zuführungsleitung 11 ein Winkelkanal 38 zunächst axial und dann radial, der sich als radialer Kanalabschnitt 38a im Verbindungsrohr 17 fortsetzt. Der Kanalabschnitt 38a kann durch eine in das Verbindungsrohr 17 in eine vorhandene Bohrung fest eingesetzte Hülse 39 gebildet sein, die das Verbindungsrohr 17 nach außen überragt und somit einen Kupplungs- bzw. Verbindungszapfen 41 bildet. Am inneren Ende kann die Hülse 39 auch in eine entsprechende Bohrung der Anschlußplatte 37 hineinragen und letztere somit fixieren. Die Hülse 39 besteht vorzugsweise aus Kunststoff. Diese Anordnung der Anschlußplatte 37 ist für einen Halter 4 vorgesehen, der hin und her schwenkt.

In der Umfangsfläche des Deckels 24 befindet sich ein Steckloch 42, dessen Form und Größe an die Form und Größe des Verbindungszapfens 41 angepaßt ist, so daß der Deckel 24 mit dem radialen Steckloch 42 dicht auf die Hülse 39 bzw. den Verbindungszapfen 41 aufsteckbar ist. Der vertikale Abstand der Hülse 39 von der Grundfläche 21a ist gleich dem Abstand des Stecklochs 42 von der Unterseite des Behälters 6. Infolgedessen kann beim horizontalen Einschieben des Behälters 6 in den zugehörigen Stellplatz 5 durch die horizontale Einstellbewegung gleichzeitig die mit 43 bezeichnete Leitungsverbindung geschlossen und bei der Entnahme in umgekehrter Richtung getrennt werden. Zwischen der Oberseite des Deckels 24 und der oberen Drehplatte 15 ist ein an eines dieser beiden Teile gehaltenes Federteil 44, vorzugsweise in Form einer vertikal angeordneten axial elastisch zusammendrückbaren Hülse, vorgesehen, das in der eingesetzten Position des Behälters 6 den Deckel 24 geringfügig gegen den Topf 23 vorspannt und somit die Abdichtung des Deckels 24 gewährleistet. Vom Steckloch 42 erstreckt sich im Deckel 24 ein Kanal, insbesondere ein Winkelkanal 38b, radial einwärts, der vorzugsweise im Zentrum an der Unterseite des Deckels 24 und somit in den Hohlraum des Topfes 23 ausmündet.

Die Saugleitung 9 ist an den Heizraum 3 angeschlossen, so daß im Betrieb der Vorrichtung 1 im Heizraum 3 ein Unterdruck erzeugt werden kann. Dieser Unterdruck kann sich durch die vorhandenen Spalte oder hierfür extra vorgesehenen Kanäle einerseits zwischen den Topfteilen 26,27 sowie dem Mantel 28 und andererseits zwischen den Topfteilen 26,27 zunächst in den unteren Applikationsraum 23a und dann auch in den oberen Applikationsraum 23b fortsetzen. Aufgrund dieser Unterdruckwirkung läßt sich der in den Behältern 6 bei der Behandlung entstehende Dampf absaugen, wobei aufgrund des Durchtritts des Dampfes und/oder Lösungsmittels durch das auf dem Filter 34 und/oder dem Siebboden 32 liegende Probenmaterial die Behandlung forciert wird.

Das Absaugen des Dampfes läßt sich dadurch verbessern, daß Luft oder ein Gas in den Heizraum 3 eingelassen wird, wodurch eine Luft-bzw. Gasströmung beim Absaugen erreicht wird. Dies kann durch eine in Figur 1 dargestellte Belüftungsöffnung vorzugsweise mit einem Belüftungsventil 40 erreicht werden, das in einem Kanal 40a im Gehäuse 13 angeordnet ist, das den Heizraum 3 mit der Umgebung verbindet, vorzugsweise von außen zugänglich ist und wahlweise zu schließen und zu öffnen und dabei vorzugsweise einstellbar ist. Aufgrund des sich beim Absaugen einstellenden Gas- oder Luftstromes lassen sich die dampfförmigen Bestandteile aus dem Innenraum des Behälters 6 und aus dem Heizraum 3 im Sinne einer Spülung besser absaugen.

Das Ausführungsbeispiel gemäß Figuren 3 bis 5, bei dem gleiche oder vergleichbare Teile mit gleichen Bezugszeichen versehen sind, unterscheidet sich von dem Ausführungsbeispiel nach Figur 2 lediglich dadurch, daß der Deckel 24 am Halter 4 angeordnet, bzw. gehalten und somit Teil des Halters 4 ist. Zur Halterung des Deckels 24 am Halter 4 dient eine Halteschraube 15a, die ein vorzugsweise koaxial zum Behälter 6 angeordnetes vertikales Loch in der oberen Drehplatte 15 durchfaßt und in ein Gewindeloch in der Oberseite des Deckels 24 eingeschraubt ist, wobei die Halteschraube 15a das hülsenförmige Federteil 44 vertikal durchfaßt. Mit der Halteschraube 15a, deren Kopf vorzugsweise in der Oberseite der oberen Drehplatte 15 versenkt ist, läßt sich der Deckel 24 nicht nur halten, sondern es läßt sich auch seine Höhenlage einstellen, indem die Schraube ein- oder ausgeschraubt wird. Dabei ist der Deckel 24 an seiner Innenseite durch die Steckverbindung 43 zusätzlich nachgiebig gehalten, was zusätzlich zur Biegsamkeit der Hülse 39 durch ein radiales Bewegungsspiel der Hülse 39 im Verbindungsrohr 17 erreicht werden kann. Bei dieser Ausgestaltung ist die Steckverbindung 43 für eine fortdauernde Verbindung gedacht. Da der Deckel 24 am Halter 4 gehalten ist, wird zum Einstellen und Entnehmen des Behälters 6 nur der Topf 23 horizontal in den Stellplatz 5 eingeschoben bzw. entnommen. Hierbei wird der Topf 23 nicht nur selbsttätig geschlossen bzw. geöffnet, sondern es wird auch eine anstelle der Steckverbindung 43 vorhandene Leitungsverbindung 45 zwischen der Zuführungsleitung 11 und dem oberen Applikationsraum 23b des Topfes 23 beim Einschieben hergestellt und beim Herausnehmen getrennt. Diese Leitungsverbindung 45 wird durch den Kanal 38b und die Öffnung 23c des Topfes 23 gebildet. Im Gegensatz zur Ausgestaltung gemäß Figur 2, bei der die Achse der Steckverbindung 43 horizontal verläuft, verläuft die Achse der Leitungsverbindung 45 vertikal.

Auch bei der Ausgestaltung gemäß Figur 3 wird der Deckel 24 in einer solchen Höhenlage eingestellt, daß der Topf 23 mit einer leichten vertikalen Klemmwirkung zwischen den Deckel 24 und der unteren Drehplatte 14 einschiebbar ist, wobei letztere mit einem besonderen, die Führung 21 aufweisenden Führungsteil besetzt sein kann. Da die Halteschraube 15a in Richtung nach oben nicht begrenzt ist, kann beim Einschieben des Topfes 23 der Deckel 24 geringfügig gegen die Federkraft des Federteils 44 hochgedrückt werden. Zur Erleichterung des Einschiebens können an der Unterseite des Deckels 24 außen und/oderan der Oberseite des Deckels 24 innen Einführungsschrägen angeordnet sein.

Bei der vorliegenden Ausgestaltung gemäß Figur 3 ist die unterseitige Ausnehmung 23c im Deckel 24 radial nach außen offen, so daß der Topf 23 seitlich in die Ausnehmung 23c eingeschoben werden kann. Dabei bildet die radial innere Begrenzungsfläche der Ausnehmung 23c einen mit dem oberen Rand des Topfes 23 bzw. der Ringdichtung 25 zusammenwirkenden Anschlag A, der die Einschubbewegung des Topfes 23 in der gewünschten Standposition begrenzt. Hierbei bildet somit auch die Ausnehmung 23c eine Einschiebe-Führung 19.

Der Vorrichtung 1 ist eine Einrichtung zum Messen der in oder an den Behältern 6 vorhandenen Temperatur zugeordnet. Vorzugsweise handelt es sich hierbei um wenigstens einen berührungslosen Temperaturmesser, inbesondere einem Infrarot-Temperaturmesser 46, der vorzugsweise im unteren Bereich der Drehebene der Behälter 6 seitlich vom Halter 4 angeordnet ist und an den die Behälter 6 im Betrieb vorbeibewegt werden. Der Temperaturmesser 46 ist durch eine elektrische Steuerleitung mit der Steuereinrichtung 12 verbunden.

Im folgenden wird ein Verdampfungsvorgang anhand der Figuren 2 bis 5 beschrieben. Aus einer Materialprobe 47 soll z.B. der Feuchte- oder Fettgehalt bestimmt werden. Hierzu wird eine Menge der Probe 47 auf die Filterscheibe 34 aufgetragen und eingewogen mittels der Wage 10, so daß ihre Menge bestimmt ist. Die mit der Probe 47 besetzte Filterscheibe 34 wird dann in das Topfoberteil 27 eingelegt, wobei die Topfteile 26,27 sich bereits im Mantel 28 befinden können oder danach darin eingesetzt werden können. Danach wird der Behälter 6 mit Deckel 24 (Fig.2) oder ohne Dekkel 24 (Fig. 3) horizontal in seine Behandlungsposition auf den zugehörigen Stellplatz 5 geschoben, wobei selbsttätig die Leitungsverbindung 43 oder 45 geschaffen wird. Aufgrund der Spannung des Federteils 44 ist der Deckel 24 dicht verschlossen, wobei die Probe 47 sich im unteren Bereich des Topfoberteils 27 auf der Filterscheibe 34 befindet (Figur 2 bzw. 3). Danach kann der Start für den Verdampfungsvorgang beginnen. Es können das Heizgerät 2, der Halter 4 und die Saugpumpe 7 gleichzeitig starten, wobei die Saugpumpe einen Druck von 20 millibar und das Heizgerät 2, eine Temperatur von etwa 80°C im Heizraum 3 erzeugen können. Diese Behandlungszeit kann etwa 5 Minuten dauern. Hierbei wird die Probe getrocknet, wobei sich eine vorhandene Feuchte in der Probe verflüchtigt und abgesaugt wird, was durch die in Figur 3 dargestellten Strömungspfeile 48 verdeutlicht ist. Die flüchtigen Anteile gelangen aus dem oberen Applikationsraum 23b durch die Filterscheibe 34 und den perforierten Boden 32 in den unteren Applikationsraum 23a und von dort durch die vorbeschriebenen Spalte oder besondere radiale Durchgangslöcher 49 im Mantel 28 bzw. Mantelunterteil 28a und/oder Manteloberteil 28b in den Heizraum 3, und sie werden weiter durch die Saugleitung 9 abgesaugt, im Kühler 8 kondensiert und gesammelt. Hierdurch wird die Probe 47 getrocknet. Sofern nur eine Trocknung erreicht werden soll, kann die Behandlung der Probe hierdurch bereits abgeschlossen sein. Die Höhe und die Zeitdauer der Temperatur im Heizraum 3 kann durch einen Zeitschalter und/oder dem Temperaturmesser 46 ermittelt werden, der die Temperatur am oder im Behälter 6 mißt. Nach der vorbeschriebenen Behandlungsstufe kann der Unterdruck im Heizraum 3 abgebaut werden, was durch Öffnen des Ventils 40 in der Wandung des Heizraumes 3 möglich ist. Auch das Ventil 40 läßt sich durch die Steuereinrichtung 12 automatisch wahlweise öffnen und schließen.

Ein nächster Behandlungsschritt kann gemäß Figur 4 bei Normaldruck im Heizraum 3 erfolgen. Mittels einer nicht dargestellten Pumpe oder Schwerkraft wird eine bestimmte Menge des Lösungsmittels 53 (Eluent) z.B. ca. 10 ml, vorzugsweise in das Zentrum des oberen Applikationsraumes 23b eingelassen, so daß das Lösungsmittel 53 auf die Probe 47 gelangt. Gleichzeitig werden das Heizgerät 2, die Saugpumpe 4 und der Halter 4 eingeschaltet bzw. angetrieben, wobei noch eine geringe Menge Lösungsmitte], ca. 3-5 ml hinzugegeben werden können. Das heiße Lösungsmittel 53 durchläuft die Probe 47 und das Filter 34, gelangt bereits verdampfend in den unteren Applikationsraum 23a, wobei es weiter verdampft (Pfeile 54) und wie vorbeschrieben aus dem System abgesaugt wird.

Im Kondensations-Kühler 8 kann der Lösungsmitteldampf kondensiert und zurückgewonnen werden. Es ist auch eine Wiederzuführung durch hierfür vorgesehene Rückführungsleitungen möglich (nicht dargestellt). Bei diesem Behandlungsschritt wird der Durchtritt des Lösungsmittels 53 mit ggf. bereits vorhandenen Dampfanteilen durch das Filter 34 und den Boden 32 durch den Unterdruck forciert. Auch bei diesem Behandlungsschritt kann die Behandlungsdauer durch die Behandlungszeit und/oder Temperatur bestimmt bzw. gesteuert werden.

Beim nächsten Behandlungsschritt gemäß Figur 5 kann - falls erwünscht - eine Totaltrocknung stattfinden. Hierbei verdampft das Lösungsmittel 53 vollständig, wobei die Temperatur durch entsprechende Steuerung des Heizgerätes aufrechterhalten werden kann oder das Heizgerät abgeschaltet werden kann. Dies ist möglich, weil die Temperatur im Mantel 28 ihren Höhepunkt erreicht und einen Nachheizeffekt und somit die Trocknung bewirkt. Der Betrieb der Saugpumpe kann dabei bis zum Ende des Behandlungsschrittes aufrecht erhalten werden. Es kann auch der Unterdruck durch Öffnung des Ventils 52 abgebaut werden. Nach diesem Behandlungsschritt befindet sich auf dem Filter 34 ein Rückstand 47a des Proben materials. Auf dem Boden des Topfunterteils 26 befindet sich aus dem Probenmaterial eluiertes Fett (Eluat) 47b. Durch Auswägen des Fettes und des Rückstandes lassen sich die angestrebten Untersuchungswerte ermitteln.

Im Kondensations-Kühler 8, der ebenfalls der Saugwirkung der Saugpumpe 7 ausgesetzt ist, kann der Lösungsmitteldampf kondensiert und zurückgewonnen werden. Mittels einer nicht dargestellten Leitung kann das Kondensat zur Zuführungsleitung 11 zurückgeführt und wiederverwendet werden.

Bei den Ausführungsbeispielen gemäß Fig. 1 bis 5 erfolgt auch eine äußere Kühlung des Halters 4 und der Behälter 6 durch den den Heizraum 3 durchquerenden Gas- oder Luftstrom.

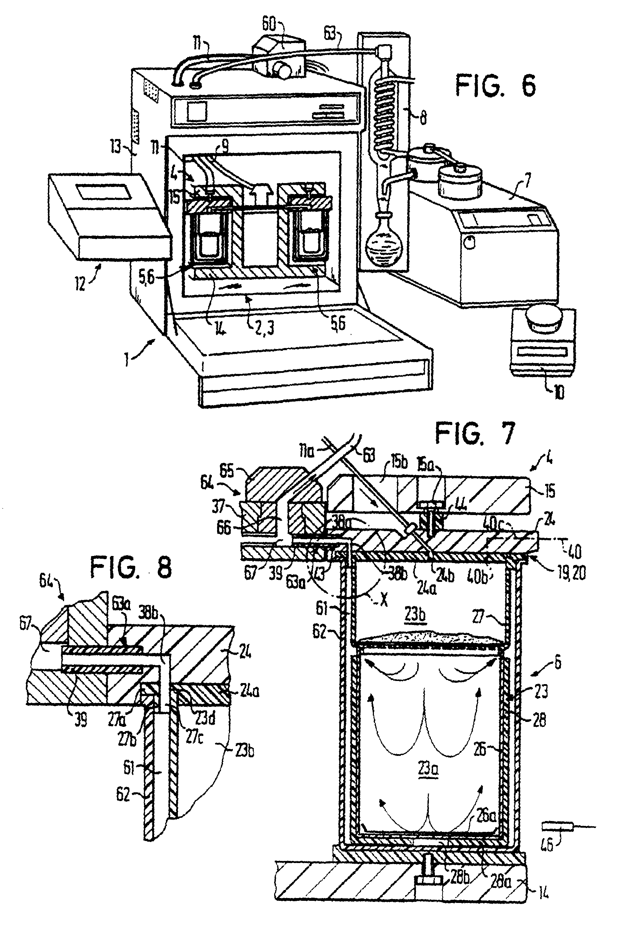

Das Ausführungsbeispiel gemäß Figuren 6 bis 8 bei dem gleiche oder vergleichbare Teile mit gleichen Bezugszeichen versehen sind, unterscheidet sich von dem vorbeschriebenen nicht zur Erfindung gehörigen Ausführungsbeispiel durch mehrere Alternativen. Zum einen sind die Behälter 6 jeweils in einer eigenen Unterdruckkammer 61 angeordnet, die durch eine den zugehörigen Behälter 6 in einem geringen Abstand horizontal umgebende, insbesondere hohlzylindrische Wand oder ein topfförmiges, vorzugsweise ebenfalls hohlzylindrisches Gehäuse 62 gebildet ist, wobei die die Unterdruckkammer 61 bildende Umfangswand an ihrem oberen Rand mit dem Deckel dicht zusammenwirkt. Jede Unterdruckkammer 61 ist durch eine Saugleitung 63 mit der Saugpumpe 7 verbunden, wobei die Saugleitung 63 - in vergleichbarer Weise wie die Zuführungsleitung 11 - sich von der gemeinsamen Saugleitung 63 in einem Verteiler-bzw. Abzweigstück 64 in der Anzahl der vorhandenen Behälter 6 zu diesen hin verzweigen kann. Vorzugsweise ist die gemeinsame Saugleitung 63 axial mittels geeigneten Anschlußarmaturen an das zentrale Verteilerstück 64 angeschlossen, dessen sich abwärts erstreckender Durchgangskanal 66 in einen unterhalb des Verteilerstücks 65 angeordneten Freiraum 67 mündet, von dem die gewünschte Anzahl Saugleitungsabschnitte 63a abzweigen können. Dieser Halter 4 ist somit für ein kontinuierliches Drehen eingerichtet. Das Reagenzmittel wird vor dem Einschieben der Behälter in letzteren eingefüllt.

Soweit die Halterung des Deckels 24 betroffen ist, ist dieser entsprechend dem Ausführungsbeispiel gemäß Figur 3 mittels der Halteschraube 15a und der Leitungs-Steckverbindung 43 am Halter 4 gehalten, wobei der Topf 23, der hier mit dem Unterdruckgehäuse 62 eine Einheit bildet, von der Seite her zwischen dem Dekkel 24 und der unteren Drehplatte 14 horizontal einschiebbar und wieder herausnehmbar ist, wobei die seitliche Führung 19 hier durch die Ausnehmung 20 an der Unterseite des Deckels 24 gebildet sein kann.

Auch hier ist die Leitungs- bzw. Steckverbindung 43 durch die Hülse 39 gebildet, die mit dem Freiraum 67 in Verbindung steht. Der Kanal 38b mündet jedoch nicht vom Zentrum des Behälters 6 an der Unterseite des Deckels aus, sondem er mündet in den vorhandenen Spalt zwischen dem Topf 23 und dem Unterdruckgehäuse 62, der nur etwa 1 oder mehrere mm breit bemessen ist. Da das Volumen der Unterdruckkammern 61 somit klein ist, kann der Unterdruck mit einem geringeren Leistungsaufwand erzeugt werden.

Sofern eine automatische Zuführung eines Reagenz- bzw. Lösungsmittels 53 erwünscht ist, kann eine Zuführungsleitung 11a vorgesehen werden, die mittels einer geeigneten Armatur an einen vorzugsweise von oben nach unten verlaufenden Durchführungskanal 68 im Deckel 24 angeschlossen werden kann, wobei vorzugsweise der Durchführungskanal 68 im Zentrum des Topfes 23 in diesen mündet. Bei der Ausgestaltung gemäß Figur 7 ist ein zusätzlicher flacher Dekkel 24a vorgesehen, der auf einer Innenschulter 23d im oberen Randbereich des Topfes 23 vorzugsweise in diesen versenkt angeordnet ist. Die Anordnung kann so getroffen werden, daß der Deckel 24a flach an der Unterseite des Deckels 24 bzw. der Anlagefläche 20a der Ausnehmung 20 anliegt. Der zusätzliche Deckel 24a besteht vorzugsweise ebenfalls aus einem Material, insbesondere Kunststoff, das den Mikrowellen einen solchen Widerstand entgegensetzt, daß es im Betrieb erwärmt wird (Weflon). Das Reagenz-bzw. Lösungsmittel 53 gelangt durch ein vertikales, zentrales Loch 24b im unteren Deckel 24a in den Topf 23. Bei den Reagenzmittel-Zuführungsleitungen 11a kann es sich um jeweils gesonderte Leitungen oder um eine von einer gemeinsamen Leitung ausgehenden Leitungszweige handeln, die an eine Förderpumpe 60 angeschlossen sind. Wegen der oder den Zuführungsleitungen 11a wird dieser Halter 4 im Betrieb hin und her gedreht.

Auch bei dieser Ausgestaltung ist ein Belüftungsventil 40 vorgesehen, das im Bereich der Saugpumpe 7 und als Spülventil im Deckel 24 angeordnet sein kann, wobei sein Belüftungskanal 40b und/oder 40c mit dem Unterdruckraum 61 und/oder den Innenraum des Topfes 23 verbunden sein kann, wie es in Figur 7 angedeutet ist.

Die Zuführungsleitungen 11a können sich durch in der oberen Drehplatte 15 angeordneten Durchführungslöchern 15b erstrecken.

Ein weiterer Unterschied der Ausgestaltung gemäß Figuren 6 bis 12 besteht darin, daß das Topfoberteil 27 mit einem Außenflansch 27a auf dem oberen Rand des Unterdruckgehäuses 62 aufliegt, der ebenfalls einen Außenflansch aufweisen kann, Dabei ist das Topfoberteil 27 durch einen an der Unterseite des Flansches 27 angeordneten Ringansatz 27b im Unterdruckgehäuse 62 zentriert, der mit Bewegungsspiel darin einfaßt. Unterhalb des Ringansatzes27b befindet sich der Ringspalt zwischen dem Topf 23 und dem Unterdruckgehäuse 62. Im übrigen ist auch das Topfunterteil 26 vorhanden, das das untere Ende des Topfoberteils 27 von unten übergreift und dadurch zentriert sein kann. Es ist vorteilhaft, im Topfunterteil 26 eine Schale 26a auf dessen Boden aufzulegen, auf der sich Rückstände des Probenmaterials sammeln und dann leicht entfernt werden können. Der Durchgang zwischen dem Kanal 38b und dem Unterdruckraum 61 erfolgt durch einen vertikalen Kanal 27c, der den Flansch 27a und den Ringansatz 27b vertikal durchsetzt und mit dem Kanal 38a fluchtet. Wenn an der Unterseite des Deckels 24 oder an der Oberseite des Flansches 27a eine ringförmige, mit dem Kanal 38a in Verbindung stehende Nut vorhanden ist, braucht der Kanal 27c nicht zu fluchten.

Beim Topf 23 gemäß Figuren 7 bis 12 befindet sich der Mantel 28 im Unterdruckraum 61, wobei er mit seiner Außenmantelfläche am Ünterdruckgehäuse 62 oder vorzugsweise mit seiner Innenmantelfläche am Topfunterteil 26 anliegen kann. Bei allen Ausführungsbeispielen kann der Mantel 28 ein topfförmiges Gehäuse sein, d.h. einen den Topf 23 untergreifenden Boden 28a aufweisen, der vorzugsweise im Zentrum ein Loch 28b aufweist.

Die Funktion der Vorrichtung 1 dieses Ausführungsbeispiels ist ähnlich dem vorbeschriebenen nicht zur Erfindung gehörenden, Ausführungsbeispiel, wobei jedoch der Heizraum 3 nicht direkt evakuiert wird, sondern lediglich der jeweils zugehörige Unterdruckraum 61 und zwar mittels der Saugpumpe 7 und der Saugleitung 63,63a. D.h., der freie Heizraum 3 ist gemäß der Erfindung von der Durchführung der abgesaugten Dämpfe freigestellt. Allerdings besteht eine Luft- oder Gasströmung zwischen der Belüftungsöffnung 40a und den Belüftungskanälen 40b. Hierdurch werden die unter der Mikrowellenbestrahlung verdampfenden Bestandteile des Lösungsmittels und evtl. des Probenmaterials zunächst aus dem oberen Applikationsraum 23b in den unteren Applikationsraum 23a und dann durch zwischen dem Topfunterteil 26 und dem Topfoberteil 27 vorhandenen Fugen bzw. Spalte in den Unterdruckraum 61 und dann weiter abgesaugt. Auch bei diesem Ausführungsbeispiel kann der Dampf im Kühler 8 kondensiert, wiedergewonnen und als Lösungsmittel wieder zugegeben werden.

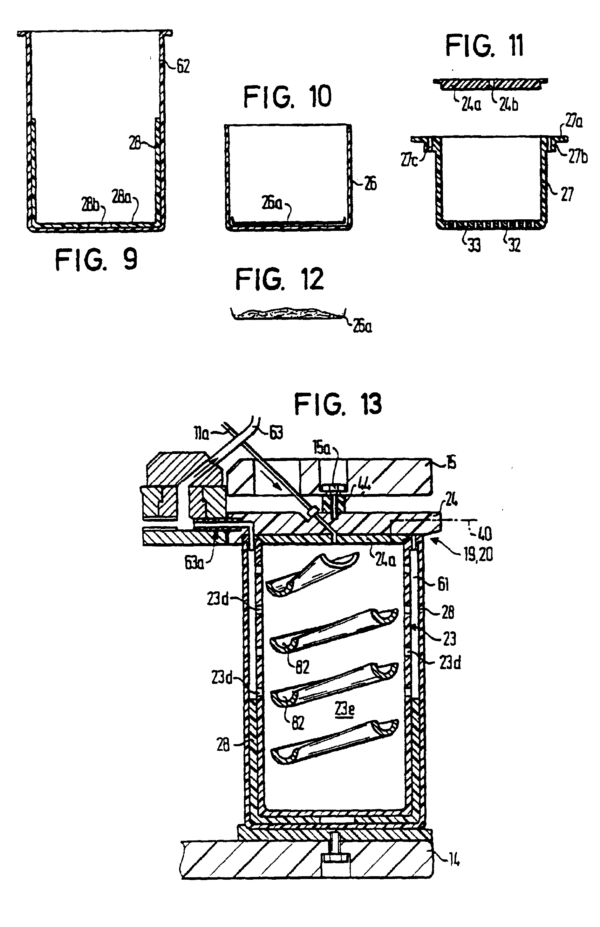

Beim Ausführungsbeispiel gemäß Figur 13, bei dem gleiche oder vergleichbare Teile ebenfalls mit gleichen Bezugszeichen versehen sind, unterscheidet sich vom Ausführungsbeispiel gemäß Figur 7 durch eine andere Ausgestaltung der Behälter 6 und einer anderen Anwendung, nämlich zum Reinigen eines Lösungsmittels durch dessen Verdampfung, wobei die Verunreinigungen auf dem Grund des Topfes 23 verbleiben. Im Verdampfungsbetrieb wird unter der Beheizung mittels Mikrowellen das Lösungsmittel durch die Zuführungsleitung 11a zugeführt, wobei gleichzeitig die Saugpumpe eingeschaltet und der Drehantrieb werden, so daß in der den hier einteiligen Topf 23 umgebenden Unterdruckkammer 61 Unterdruck erzeugt wird, der sich durch radiale Löcher 23d in der oberen Hälfte oder im oberen Bereich des Topfes 23 in dessen Innenraum 23e fortsetzt, wodurch der Lösungsmittel-Dampf abgesaugt wird. Auch hier kann das Belüftungsventil 40 eine angestrebte Spülfunktion verbessern. Um die Verweilzeit des in den Innenraum 23e gelangenden Lösungsmittels zu vergrößern, bevor es zum Boden des Topfes 23 gelangt, ist im Topf 23 eine abwärts gewendelte Rinne 82 angeordnet, in die das flüssige Lösungsmittel aus dem Durchgangsloch 76 fällt und wendelförmig nach unten strömt. Aufgrund des vergrößerten Weges in der Rinne 82 ergibt sich die angestrebte größere Einwirkungszeit, in der die Mikrowellen das Lösungsmittel erhitzen und verdampfen können.

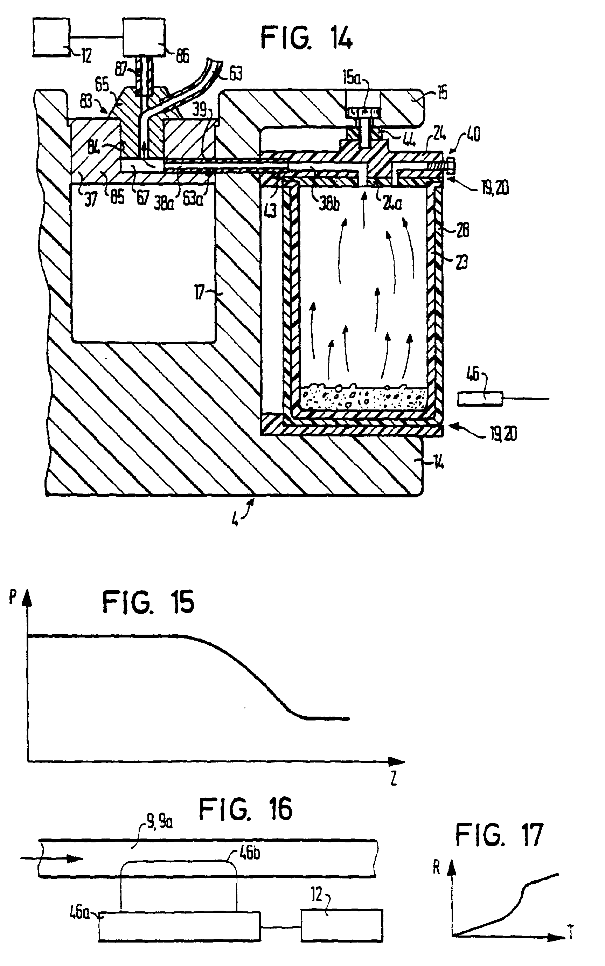

Bei der Variante der Vorrichtung 1 gemäß Figur 14, bei der ebenfalls gleiche oder vergleichbare Tei1e mit gleichen Bezugszeichen versehen sind und deshalb zwecks Vermeidung von Wiederholungen nicht weiter beschrieben werden, ist ebenfalls ein einteiliger Topf 23 vorgesehen, der zwischen der unteren Drehplatte 14 und den am Halter 4 gehaltenen Deckel 24 horizontal in seine Arbeitsstellung schiebbar und wieder entnehmbar ist. Auch bei dieser Ausgestaltung ist eine durch den Deckel 24, die Steckverbindung 43 und das Verteilerstück 65 verlaufende Leitung 63a vorgesehen, bei der sich jedoch nicht um eine Zuführungsleitung, sondern um die Saugleitung handelt, die ggf. mit dem Kondensations-Kühler 8 und der Saugpumpe 7 verbunden ist.

Bei dieser Ausgestaltung wird das Probenmaterial und/oder Lösungsmittel in die Behälter 6 eingegeben, bevor der Topf 23 in den Halter 4 eingeschoben wird. Während des Heiz- und Verdampfungsbetriebs werden verdampfungsfähige Bestandteile des Proben materials und/oder des Lösungsmittels verdampft und die Dämpfe werden nach oben durch die Saugleitung 9a abgesaugt, wobei das im Deckel 24 vorhandene Belüftungsventil 40 eine vorteilhafte Spülwirkung des Innenraums 23e des Topfes 23 bewirkt.

Bei der Ausgestaltung nach Figur 14 ist das Verteilerstück 65 Teil einer Drehverbindung 83, die bei kontinuierlicher Drehung des Halters 4 eine gleichzeitige Verteilung bzw. Zusammenführung der Kanäle 38a der vorhandenen Behälter 6 zur gemeinsamen Saugleitung 63 ermöglicht, wobei das Verteilerstück 65 im Drehlagerloch 84 eines in das Verbindungsrohr 17 eingesetzten Drehlagerstücks 85 stillsteht, das sich mit dem Halter 4 um das Verteilerstück 65 dreht. Die Zusammenführung der Ströme erfolgt im Freiraum 67 unterhalb des Verteilerstücks 65 bzw. dessen Durchgangskanals.

Gemäß Figur 14 ist der Vorrichtung 1 eine Einrichtung zum Messen des Unterdrucks in einem Behälter 6 zugeordnet, die durch seine elektrische Steuerleitung mit dem Steuergerät 12 verbunden ist und somit eine Steuerung oder Regelung des Heizgerätes 2 in Abhängigkeit vom Unterdruck ermöglicht. Bei der vorliegenden Ausgestaltung ist ein Druckmesser 86 vorgesehen, der durch eine Rohr- oder Schlauchleitung 87 mit der Saugleitung 63 verbunden ist und somit einen Unterdruck anzeigt, der in etwa dem Unterdruck im Behälter 6 entspricht, und der mit der Steuereinrichtung 12 verbunden ist, die dazu eingerichtet ist, mittels einer Auswerteeinrichtung, ein Steuersignal abzugeben, wenn der Unterdruck unter einen vorgebenen Wert abfällt. Diese Ausgestaltung ermöglicht ein vorteilhaftes Verfahren zur Bestimmung des Endzeitpunktes der Verdampfung. Wenn die verdampfungsfähigen Bestandtei1e verdampft sind und die Verdampfung aufhört, fällt der durch die Saugpumpe 7 erzeugte Saugdruck selbsttätig ab, weil die gleichmäßig arbeitende Saugpumpe 7 aufgrund des Fehlens der Verdampfung einen stärkeren Unterdruck erzeugt. Hierdurch wird der Endzeitpunkt der Verdampfung bestimmt und der Behandlungsvorgang durch Abschaltung der Vorrichtung 1 bzw. der Saugpumpe 7, des Heizgerätes 2 und des Drehantriebs für den Halter 4 beendet, wobei auch das Belüftungsventil 40 zur Herbeiführung eines Normaldrucks geöffnet werden kann. In Fig. 15 ist der Druckverlauf mit einem Druckabfall als Kurve dargestellt, wobei die Zeit Z auf der Abzisse und der Druck P auf der Ordinate dargestellt sind.

Alternativ ist es möglich, den Endzeitpunkt der Verdampfung durch eine Berücksichtigung des Temperaturverlaufes im Behälter 6 zu bestimmen. Die Steuereinrichtung 12 ist dazu eingerichtet, bei einem Temperaturanstieg über ein vorbestimmtes Maß hinaus oder einem Temperaturanstieg, der schneller als normal stattfindet, ein Steuersignal zu erzeugen. Wenn die verdampfungsfähigen Bestandteile im Behälter verdampft sind und somit die Verdampfung aufhört, wird keine Heizenergie mehr für die Verdampfung verbraucht, was selbsttätig zu einer Temperaturerhöhung führt. Hierdurch ist der Endzeitpunkt der Verdampfung bestimmt, und die Vorrichtung erzeugt das vorgenannte Steuersignal, wodurch der Verdampfungsvorgang beendet wird, d.h. die Vorrichtung 1 wird in vorbeschriebener Weise abgeschaltet.

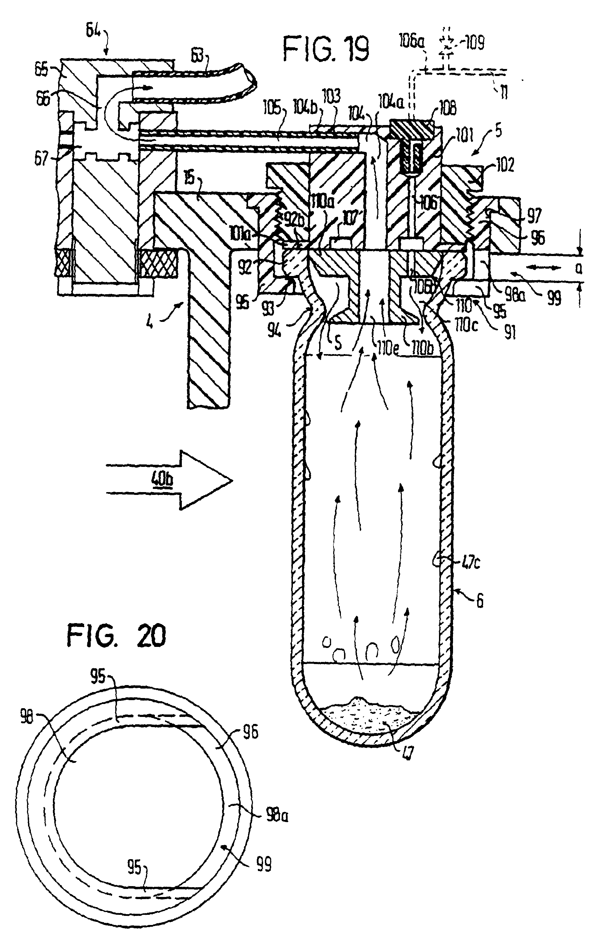

Zur Überwachung bzw. Messung der Temperatur kann der Temperaturmesser.46 benutzt werden. Noch vorteilhafter ist es, die Temperatur unmittelbar in der Saugleitung zu messen. Hierzu kann gemäß Figur 16 ein Temperaturmesser 46a mit einem Widerstand bzw. Widerstandsdraht 46b dienen, der die Temperatur direkt in der Sauglertung 63 oder zugehörigen Kanalabschnitten mißt. Mit steigender Temperatur erhöht sich der Widerstandswert, so daß der Temperaturverlauf und die Temperatur elektrisch überwacht und gemessen werden kann. Auch derTemperaturmesser46a ist durch eine elektrische Signalleitung mit der Steuereinrichtung 12 verbunden, die bei einer Überschreitung der Temperatur über ein vorbestimmtes Maß das vorbeschriebene Steuersignal zur Beendigung des Verdampfungsvorganges erzeugt. In Figur 17 ist der Temperaturverlauf mit einem Temperaturanstieg als Kurve dargestellt, wobei auf der Abzisse die Temperatur T und auf der Ordinate der Widerstand R aufgetragen ist.

Bei den Ausführungsbeispielen gemäß den Fig. 7 bis 17 erfolgt eine äußere Kühlung des Halters 4 und der Behälter 6 und außerdem eine innere Kühlung der Behälter 6 durch den Gas- oder Luftstrom.

Die Ausgestaltung nach den Figuren 19 bis 20, bei der gleiche odervergleichbare Teile mit gleichen Bezugszeichen versehen sind, unterscheidet sich von den vorbeschriebenen Ausgestaltungen in zweierlei Hinsicht. Zum einen sind die Behälter 6 im Halter 4 jeweils mittels einer Aufhängevorrichtung 91 in hängender Position gehalten, und zum anderen ist eine Luft-Spülvorrichtung für den Heizraum 3 vorgesehen, die weitgehend der durch die Saugpumpe 7, die Saugleitung 9 und das Belüftungsventil 40 gebildeten Absaugvorrichtung entspricht, jedoch nicht zur Absaugung von Dämpfen sondern nur Kühlluftumwälzung dient.

Bei einer Halterung der Behälter 6 durch Aufhängen kann der Halter 4 einfacher und kostengünstiger hergestellt werden, da die untere Drehplatte 14 in Fortfall kommen kann. Bei einer solchen Ausgestaltung ist der jeweilige Stellplatz 5 nur an der oberen Drehplatte 15 des Halters 4 vorgesehen, der - davon abgesehen -, der Ausgestaltung des Halters 4 gemäß den vorbeschriebenen Ausgestaltungen entsprechen kann.

Bei dieser Ausgestaltung werden Behälter 6 verwendet, die in einem nach unten gerichteten Abstand von ihrem oberen Rand Aufhängeschultern aufweisen. Bei der vorliegenden Ausgestaltung weisen die Behälter 6 an ihrem oberen Rand einen horizontalen Randflansch 92 auf, dessen Unterfläche 93 von Halteteilen der Aufhängevorrichtung 91 über- und untergriffen wird. Die vorliegenden Behälter 6 weisen unterhalb des Randflansches 92 eine Halseinschnürung 94 auf, die durch eine Umfangssicke der aufrechten Behälterwand gebildet ist und deshalb im Bereich der Halseinschnürung 94 auch der Innenraum des Behälters eingeschnürt ist. Zum Aufhängen des Behälters 6 können zwei seitliche, und unterseitig an der oberen Drehplatte 15 angeordnete Winkelschenkel 95 dienen, die den Randflansch 92 seitlich übergreifen und untergreifen.

Bei der vorliegenden Ausgestaltung sind die Winkelschenkel 95 durch den Bodenrand einer zylindrischen Buchse 96 gebildet, die in einer vertikalen Bohrung 97 in der oberen Drehplatte 15 eingesetzt und durch einen Flansch gegen ein vertikales Verschieben und gegen Drehung gesichert ist, z.B. formschlüssig oder durch Preßsitz oder Kleben. Wie insbesondere Figur 20 zeigt, ist der Boden der Buchse 96 durch eine runde Ausnehmung 98 ausgenommen, die radial nach außen offen ist und sich an dieser Seite bis in den unteren Bereich 98a der Umfangswand der Buchse 96 erstreckt, wodurch eine seitliche, radiale Einführungsöffnung 99 fürden Randflansch 92 gebildet ist, in die dieser mit Bewegungsspiel einschiebbar ist, siehe Doppelpfeil. Hierzu ist der vertikale Abstand a zwischen der Unterseite der Drehplatte 15 und der Auflagerfläche des Winkelschenkels 95 etwas größer bemessen als die Dicke des Randflansches 92.

Die Oberfläche 92 b des Randflansches 92 kann an der Unterseite des Halters 4 bzw hier der Drehplatte 15 insbesondere dicht anliegen. Vorzugsweise ist in diesem Bereich ein Stopfen 101 im Halter 4 angeordnet, der gegen den Randflansch 92 spannbar ist, wodurch die Abdichtung geschaffen bzw. verbessert wird und der Behälter (6) gesichert wird. Bei der vorliegenden Ausgestaltung ist der im Querschnitt kreisrunde Stopfen 101 in einem Schraubring 102 mit geringem Bewegungsspiel drehbar gelagert, der von oben in die Buchse 96 einschraubbar ist und an seinem oberen, die Buchse 96 überragenden Endbereich Angriffselemente für einen manuellen Angriff oder Werkzeugangriff zum Ein- oder Ausschrauben aufweist. Der Stopfen 101 ist länger bemessen als der Schraubring 102, und er untergreift letzteren mit einem Flansch 101 a an seinem unteren Ende, wobei sein oberes Ende den Schraubring 102 um etwa 5 bis 10 mm überragt. Dieser überragende Endbereich ist mit 103 bezeichnet. Im Stopfen 101 befindet sich ein Durchgangskanal 104, bestehend aus einem vorzugsweise koaxialen Kanalabschnitt, der an der Unterseite mündet, und einem radialen Kanalabschnitt, der im Endbereich 103 aus dem Stopfen 101 ausmündet. Der radiale Kanalabschnitt 104 b ist durch eine oberhalb der Drehplatte 15 verlaufenden Leitungsverbindung, z.B ein fest angesetzer Schlauch oder Rohr, mit einer Drehverbindung 64 im wesentlichen entsprechenden vorbeschriebenen Ausführungsbeispielen verbunden, zu der die vorhandenen Abführungsleitungsabschnitte 105 führen und mit einer gemeinsamen Abführungsleitung 63 verbunden sind.

Außermittig ist Im Stopfen 101 ein weiterer Durchgangskanal 106 vorgesehen, der Teil einer Belüftungsvorrichtung für jeden Behälter 6 ist. Der Durchgangskanal 106 mündet an der Unterseite des Stopfens 101 in einer Ringnut 107. Am oberen Ende des Stopfens 101 kann eine Ventilschraube 108 im Stopfen eingeschraubt sein, mittels der der Durchgangskanal 106 durch Ein- oder Ausschrauben wahlweise zu schließen, zu öffnen und in seiner Größe einzustellen ist. Hierzu kann auch ein entsprechendes Ventil 109 vorgesehen sein, das in einer an den Durchgangskanal 106 von außen angeschlossenen Schlauch- oder Rohrleitung 106a angeordnet ist. Zwischen dem Stopfen 101 und dem Ventil 109 kann die Leitung 106a in Form einer Zuführungsleitung 11 verzweigen, insbesondere zwecks Zuführung eines Reagenzmittels, z.B. mittels einer Pumpe.

Vorzugsweise ist im oberen Öffnungsbereich eines jeden Behälters 6 ein stopfenförmiges Leitelement 110 angeordnet, dessen Oberseite mit der Oberseite 92b des Randflansches 92 abschließt und somit - wie bereits der Behälter 6 - mit der Unterseite des Stopfens 101 abdichtet. Das Leitelement 110 weist koaxial einen Deckel 110 a und einen davon sich nach unten pilzkopfförmig erstreckenden Leitkopf 110 b auf, der sich bei der vorliegenden Ausgestaltung bis etwa in die Halseinschnürung 94 erstreckt und der im Durchmesser so groß bemessen ist, daß zwischen ihm und der Innenumfangswandung des Behälters 6 ein kleiner Ringspalt 5 besteht. Zwischen dem Leitkopf 110 b und dem plattenförmigen Deckel 110 a ist ein freier Ringraum 110 c vorhanden. Der Deckel 110 a liegt formschlüssig an der divergenten Wandung des Randbereichs des Behälters 6 an, wodurch seine Lage gesichert ist. Fluchtend mit der Ringnut 107 ist im Deckel 110 a ein Durchgangskanal 106 b vorgesehen, der unabhängig von der jeweiligen Drehstellung des Leitelementes 110 einen Durchfluß von Luft oder einem bestimmten Gas, z B.. Inertgas oder Reagenzmittel ermöglicht. Koaxial im Leitelement 110 und somit fluchtend mit dem Durchgangskanal 104 a ist im Leitelement 110 ein zweiter, größerer Durchgangskanal 110 e vorgesehen, der Teil des Abführungsleitungsabschnitts 105 ist.

Die Funktion des Ausführungsbeispiels nach den Figuren 19 bis 20 kann im wesentlichen den vorbeschriebenen Ausführungsbeispielen entsprechen, so daß auf eine gesonderte Beschreibung verzichtet werden kann. Zur Durchführung eines Verdampfungsvorganges oder eines Probenaufschlusses werden die Behälter 6, bei denen es sich vorzugsweise um Standardbehälter aus Glas bzw. Quarz oder Keramik handelt, nach der Eingabe eines Proben materials 47 horizontal in die Aufhängevorrichtung 91 eingeschoben und durch Herunterschrauben des Schraubrings 102 abgedichtet, d.h. verschlossen und zugleich gespannt. Aufgrund dieses festen Verschlusses eignet sich diese Ausgestaltung nicht nur zur Behandung von Stoffen bei Normal- oder Unterdruck, sondern auch bei Überdruck, wozu der Schraubring 102 entsprechend zu verschließen ist. Anstelle der Schraubverspannung kann auch eine insbesondere elastische Spannvorrichtung zur Vorspannung des einen Deckel bildenden Stopfens 101 gegen den Behälterrand vorgesehen sein.

Während des Behandlungsprozesses können die entstehenden Dämpfe durch die Abführungsleitung 63 abgesaugt werden, wobei gleichzeitig das Ventil 109 (wenn vorhanden) und/oder die Ventilschraube 108 zu öffnen ist. Wahlweise kann Reagenzmittel durch die Zuführungsleitung 11 gezielt zugeführt werden. Während des Behandlungsvorganges können die Behälter 6 durch den Spülluftstrom 40 b auch an ihrer Unterseite und somit großflächig gekühlt werden und zwar durch Spülung des Heizraumes 3 mittels durch die Saugleitung 9 abgesaugte Luft, die an der Zuführungsöffnung 40, 40 a nachströmt. Hierbei kann der Dampf an der Behälterinnenwand kondensieren und als Kondensat 47 c nach unten zurücklaufen.

Bei allen vorbeschriebenen Ausführungsbeispielen ist es möglich und vorteilhaft, die vorbeschriebenen Behandlungen eines Stoffes in mehreren Behältern 6 mit dem Reagenz- bzw. Lösungsmittel in zwei oder mehr Stufen vorzunehmen, wobei bei der jeweils nachfolgenden Stufe wenigstens teilweise ein Reagenz- bzw Lösungsmittel verwendet wird, das aus der vorherigen Stufenbehandlung zurückgewonnen wurde und ggf. mit neuem Reagenz- bzw. Lösungsmittel angereichert ist. Nach der sog. Nernst-Verteilung ist der Extraktions-Wirkungsgrad größer, wenn er in Stufen erfolgt als wenn eine einzige längere Extraktion vorgenommen wird. Außerdem wird der Verbrauch von Lösungsmittel verringert.

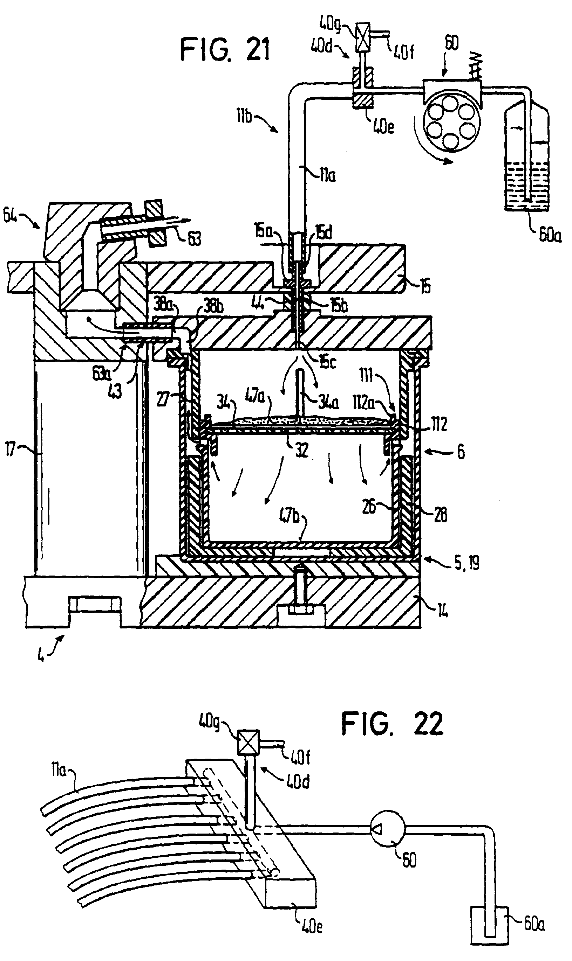

Das Ausführungsbeispiel nach Figur 21, bei dem gleiche oder vergleichbare Teile mit gleichen Bezugszeichen versehen sind, unterscheidet sich von den vorbeschriebenen Ausführungsbeispielen mit einer Zuführungseinrichtung für ein Reagenz- oder Lösungsmittel und eine Belüftungseinrichtung für jeden Behälter 6 in zweierlei Hinsicht.

Zum einen ist die in Figur 21 mit 40d bezeichnete Belüftungseinrichtung in die Zuführungseinrichtung 11b integriert. Hierdurch wird es ermöglicht, die Zuführungsleitung 11a sowohl zur Zuführung des Reagenzmittels als auch zum Belüften oder Spülen des zugehörigen Behälters 6 auszunutzen, so daß es keines separaten Belüflungskanals 40b, 40c im Deckel 24 bedarf. Gemäß Figur 21 mündet innerhalb eines Blocks 40e eine Zweigleitung 40f, hier ein flexibler Kunststoffschlauch, in die Zuführungsleitung 11a, die vom Belüftungsventil 40 ausgeht und über ein ansteuerbares Sperrventil 40g und ein Belüftungsgas zuzuführen vermag. Der Leitungszweig ist in Strömungsrichtung hinter der Pumpe 8, hier eine Schlauchpumpe, angeordnet, so daß die Zuführung des Belüftungsgases auch dann gewährleistet ist, wenn die Pumpe 8 nicht in Betrieb ist und kein Reagenzmittel zugeführt wird. Der Block 40e ist außerhalb des Heizraums 3 angeordnet oder er kann auch - sofern er mit seinen Anbauteilen aus mikrowellendurchlässigen Material besteht - auch im Heizraum 3 angeordnet sein. Die flexible Zuführungsleitung 11a ist so lang bemessen, daß der Halter 4 im Betrieb hin- und hergehende Schwenkbewegungen auszuführen vermag. Es können jeweils für einen Behälter 6 ein Vorratsbehälter 60a, und eine Förderpumpe 60 vorzugsweise außerhalb des Gehäuses für den Heizraum 3 angeordnet sein, oder es können vorzugsweise ein gemeinsamer Vorratsbehälter 60a und eine gemeinsame Pumpe 60 vorgesehen sein, wobei die Zuführungsleitung 11a im Block 40e in Zufuhrungsleitungszweige 11a verzweigt, deren Anzahl der Anzahl der vorhandenen Behälter 6 entspricht und die an den jeweils zugehörigen Behälter angeschlossen sind, wobei sie die obere Drehplatte 15 und den Deckel 24 durchsetzen (Fig. 22).

Beim vorliegenden Ausführungsbeispiel erstreckt sich die Zuführungsleitung 11a jeweils längs durch die zugehörige Halteschraube 15a und zwar in Form eines Längskanals 15b, an den sich ein koaxialer Kanal 15c im Deckel 24 anschließt, der an dessen Unterseite ausmündet. An seinem oberen Ende weist jede Halteschraube 15 einen Schlauchanschluß, hier einen Anschlußnippel 15d auf, auf den die zugehörige Zuführungsleitung 11a aufgesteckt ist.

Ein weiterer Ausgestaltungsunterschied bezieht sich darauf, daß Kondensatbildung verhindert wird oder daß sich insbesondere im oberen Bereich des Behälters bildendes Kondensat gesammelt wird und somit nicht zu dem auf dem Boden des Behälters 6 befindlichen Probenrückstand 47b zu fließen vermag, wodurch eine Analyse des Probenrückstands 47b verfälscht werden würde.

Zur Verhinderung von Kondensatbildung ist eine zusätzliche Erwärmung der Wandung des Behälters 6 vorgesehen. Hierzu können Wandungsabschnitte dienen, die aus mikrowellenabsorbierendem Material, vorzugsweise Weflon, bestehen, wobei der Behälter 6 selbst aus einem solchen Material bestehen kann oder von einem solchen Material außen und/oder innen umgeben sein kann. Hierzu kann z.B. der Behälter 6 in einen zylindrischen oder topfförmigen Mantel 28 eingesetzt sein, wie er bereits in Figur 7 dargestellt ist. Bei einem Behälter 6 mit einem Unterteil 26 und einem Oberteil 27 erstreckt sich der Mantel 28 nur bis zum oberen Bereich des Unterteils 26. Ein vergleichbarer Mantel kann auch dem Oberteil 27 zugeordnet sein.

Zum Auffangen von sich bildendem Kondensat ist eine Auffangrinne 111 am Innenumfang des Behälters 6 vorgesehen. Die Auffangrinne 111 befindet sich oberhalb des Bodens des Behälters 6. Sie kann am Behälter 6 angeformt sein oder an einem Einsatzring ausgebildet sein, der in den Behälter 6 eingesetzt ist und dicht an der Innenwandung anliegt, wobei er daran befestigt sein kann. Die Auffangrinne 111 kann auch oberhalb des perforierten Bodens 32 angeordnet sein, so daß das Kondensat nicht zum ersten Probenrückstand 47a gelangen kann. Bei einem aus einen Unterteil 26 und einem Oberteil 27 bestehenden Behälter 6 kann die Auffangrinne 111 am unteren Ende des Oberteils 27 angeordnet sein, wobei sie gemäß Figur 21 mit dem Siebboden 32 oder einem Träger dafür einstückig ausgebildet sein kann oder eine Baueinheit da mit bilden kann, wobei die Auffangrinne 111 und der perforierte Boden 32 vom Einsatzring 112 gebildet oder getragen sein kann, der auf einer Innenschulter am unteren Ende des Oberteils 27 oder auf dem Rand des Unterteils 26 aufliegen kann. Beim vorliegenden Ausführungsbeispiel wird die Auffangrinne 111 durch einen oberen Ringvorsprung 112a gebildet, der in einem radial nach innen gebildeten Abstand von der Innenwandung des Behälters 6 vom Einsatzring 112 nach oben vorragt. Der Siebboden 32 kann auf einer weiteren Schulter des Einsatzrings 112 aufliegen. Die Auffangrinne 111 besteht vorzugsweise aus einem mikrowellenabsorbierendem Material, insbesondere Kunststoff wie Weflon und zwar vorzugsweise einstückig mit ihrem Träger.

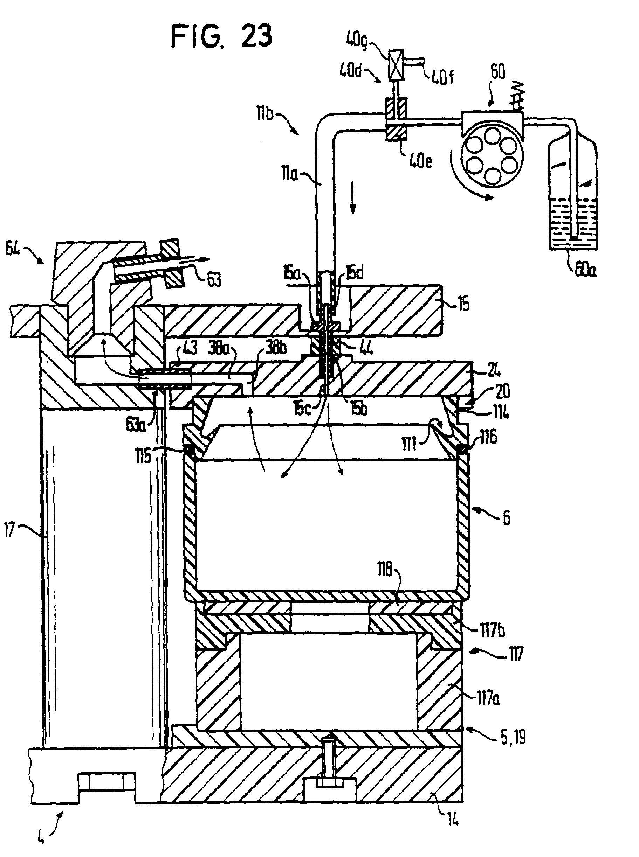

Beim Ausführungsbeispiel gemäß Figur 23, bei dem gleiche oder vergleichbare Teile ebenfalls mit gleichen Bezugszeichen versehen sind, ist die Auffangrinne 111 einteilig am Innenumfang des Behälters 6 angeordnet. Dabei kann es sich um einen ein- oder zweiteiligen Behälter 6 handeln, gemäß Figur. 23 ist kein perforierter Boden 32 zum Tragen einer Filterscheibe 34 vorgesehen, die einen zentral nach oben tragenden Stil 34a zum manuellen Angreifen aufweisen kann. Es ist im Rahmen der Erfindung auch möglich, daß das Oberteil 27 kein Behälteroberteil im Sinne dieses Wortes sondern lediglich ein Behälteraufsatzring 114 ist, so daß das Unterteil 26 den Behälter 6 bildet.

Es ist vorteilhaft, zwischen dem Behälter 6 bzw. dem Unterteil 26 und dem Aufsatzring 114 bzw. dem Oberteil 27 eine Ringdichtung anzuordnen, um die Abdichtung dazwischen zu gewährleisten. Gemäß Figur 23 ist als Dichtung ein O-Ring 115 vorgesehen, der zwischen dem oberen Rand des Unterteils 26 bzw. dem Behälter 6 und einer radialen Schulterfläche 116 des Aufsatzrings 114 wirksam ist und dessen Abdichtung durch die vertikal gerichtete elastische Spannung, mit denen der Behälter 6 zwischen der unteren und oberen Drehplatte 14, 15 geringfügig vertikal zusammengedrückt ist, forciert wird.

Wenn nach einem Verdampfungs- oder Aufbereitungsvorgang der Behälter 6 seitlich aus dem Halter 4 herausgezogen wird, werden an der Unterseite des Deckels 24 vorhandene Kondensattröpfchen durch den oberen Rand des Behälters 6 abgestreift, und sie fließen an der Innenwandung des Behälters 6 oder Aufsatzringes 114 nach unten in die Auffangrinne 111, ohne die Materialprobe 47a oder 47b zu verfälschen.

Eine weitere oder zusätzliche Maßnahme zur Verhinderung von Kondensatbildung besteht darin, an der Unterseite des Deckels 24 eine Materialschicht oder eine Platte am Deckel 24 anzuordnen oder einen zusätzlichen Deckel 24a aus mikrowellenabsorbierenden Material gemäß Figur 13 dem Behälter 6 zuzuordnen, so daß aufgrund erhöhter Erwärmung die Kondensatbildung verringert oder beseitigt wird.

Es ist auch gemäß Figur 23 aus wärmetechnischen Gründen bereits vorteilhaft, an der Standfläche für den oder die Behälter 6 eine Platte aus mikrowellenabsorbierendem Material vorzusehen.

Das mikrowellenabsorbierende Material ist vorzugsweise ein Kunststoff, in den mikrowellenabsorbierendes Material gleichmäßig verteilt eingebracht ist. Hierbei kann es sich z.B. um Kohlenstoff oder Graphit handeln, wie es bei dem in der Branche bereits bekannten Kunststoffwerkstoff WEFLON verwirklicht ist. Der wärmeabsorbierende Materialanteil ist nach der gewünschten Temperatur der Wärme zu bemessen. Er kann z.B. etwa 1 bis 50% betragen.

Ein weiterer Ausgestaltungsunterschied zu den vorbeschriebenen Ausgestaltungen besteht gemäß Figur 23 darin, daß zur Anpassung verschieden hoher Behälter 6 an den Halter 4 jeweils ein Sockel 117 vorgesehen ist, dessen horizontale Querschnittsform und -größe in etwa an die horizontale Querschnittsform und -größe des Behälters 6 angepaßt ist, so daß er auf den zugehörigen Stellplatz 5 paßt. Es ist aus Kostengründen von Vorteil, den Sockel 117 aus einem unteren Sockelteil 117a eines Kunststoffs mit niedrigerer Wärmebeständigkeit und einem oberen Sockelteil 117b aus einem Kunststoff höherer Wärmebeständigkeit und einer wärmeisolierenden Eigenschaft zu bilden, um auch bei den im Betrieb beträchtlich hohen Temperaturen die Formbeständigkeit des Sockels zu gewährleisten. Wenn eine Bodenplatte 118 aus mikrowellenabsorbierendem Material gewünscht ist, ist es vorteilhaft diese in das obere Sockelteil 117b formschlüssig einzulassen. Eine solche Steckvorrichtung empfiehlt sich auch zwischen den Sockelteilen 117a und 117b, um den Sockel 117 als Baueinheit handhaben zu können. Die Bodenplatte 118 und das obere Sockelteil 117b sind gelocht.

Bei den Ausgestaltungen gemäß Fig. 19 bis 23 ist andeutungsweise und beispielhaft dargestellt, daß die innere und/oder äußere Belüftung des Halters 4 und der Behälter 6 nicht aus dem Heizraum 3 erfolgen muß, sondern direkt von der Umgebung der Vorrichtung 1 erfolgen kann, nämlich durch jeweils eine Belüftungsleitung, siehe z.B. 40f in Fig. 21, die sich von außen das Heizraumgehäuse und den Heizraum 3 durchsetzend in den Behälter 6 erstreckt. Es ist bei allen Ausführungsbeispielen möglich, anstelle von Raumluft ein inertes Gas zwecks Kühlung in den Heizraum 3 und/oder zu den Behältern 6 zu führen, wegen Explosionsschutz bei feuergefährlichen Stoffen.

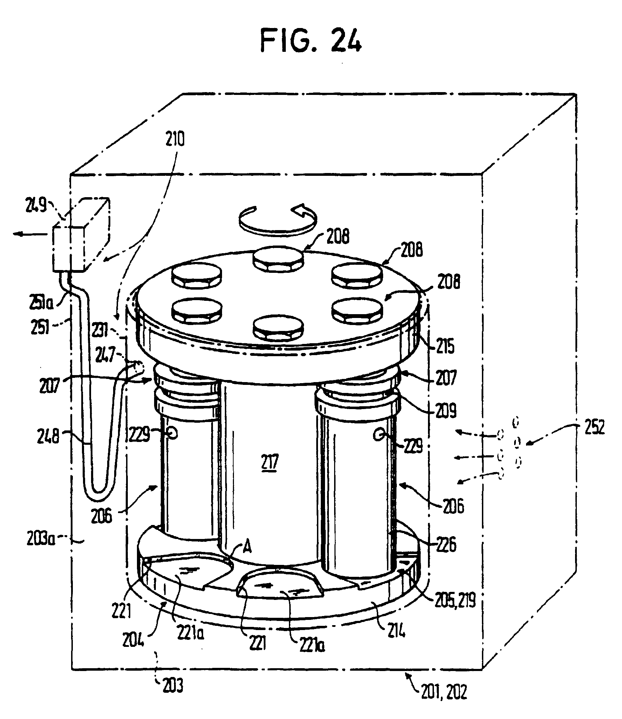

Die Vorrichtung gemäß Fig.24 bis 26 wird von Anspruch 1 nicht umfaßt, da sie z.B. keine sich durch den Deckel erstreckende Leitung mit Drehverbindung enthält.

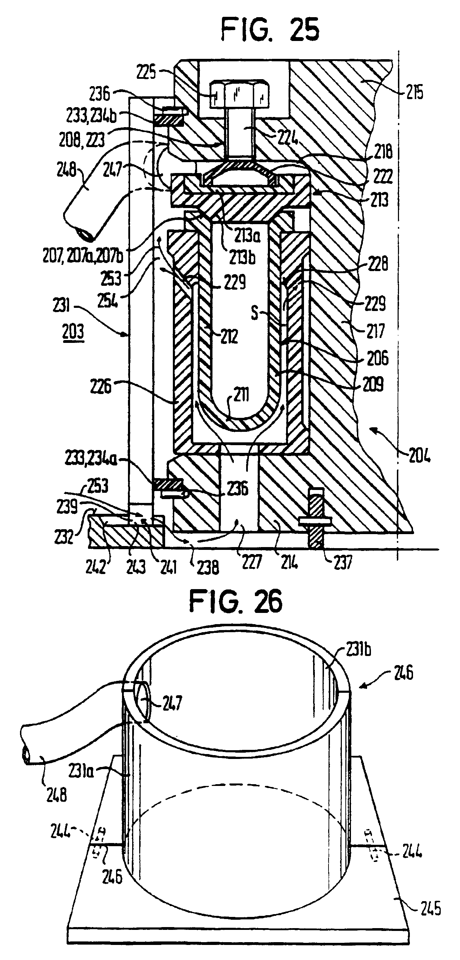

Die Haupteile der Vorrichtung 201 gemäß Fig. 24 bis 26 sind ein vorzugsweise mit Mikrowelle wirksames Heizgerät 202 mit einem Heizraum 203, der durch eine Tür 203a verschließbar ist, ein im Heizraum 203 angeordneter Halter 204 mit mehreren, vorzugsweise vier oder sechs Stellplätzen 205 für Proben-Behälter 206, jeweils ein Überdruck-Ventil 207 für jeden Behälter 206, das bei Überschreitung eines bestimmten Behälterinnendrucks selbsttätig öffnet und aufgrund der Spannung eines elastischen Druckstücks wieder schließt und jeweils eine Einstellvorrichtung 208 für jedes Ventil 207 zum Einstellen seiner elastischen Vorspannung, d.h. zum Einstellen des Druckes, bei dem das Ventil 207 sich selbsttätig öffnet, und eine Kühleinrichtung 210 für die Behälter 206 und/oder den Halter 204 im Heizraum 203 (Fig. 25).

Die Behälter 206 sind untereinander gleich ausgestaltet und bestehen jeweils aus einem topfförmigen Gehäuse 209 mit einem Gehäuseboden 211 und einer zylindrischen, sich vertikal erstreckenden Gehäusewand 212. Die durch einen Deckel 213 verschließbare Gehäuseöffnung wird durch den oberen Innenrand der Gehäusewand 212 begrenzt.

Das Ventil 207 ist im oberen Bereich des Behälters 206 angeordnet, wobei vorzugsweise sein Ventilglied durch den Deckel 213 gebildet ist. Bei Überschreitung eines gewissen Innendrucks im Behälter 206 öffnet das Ventil 207 automatisch, so daß ein Teil des Innendrucks nach außen entweichen kann. Hierdurch wird verhindert, daß der Innendruck einen vorbestimmten Wert übersteigt und der Behälter 206 überbelastet wird bzw. explodiert.

Der Ventilsitz des Ventils 207 ist am oberen Innenrand der zylindrischen Gehäusewand 212 ausgebildet und wird durch eine konzentrisch zur zylindrischen Gehäusewand 212 angeordnete Kegelsitzfläche 207a gebildet, die nach unten konvergiert. Der Kegelwinkel beträgt etwa 45 bis etwa 75°, vozugsweise etwa 60°. Eine entsprechend gefomte Kegeldichtfläche 207b weist der in dem oberen Innenrand der zylindrischen Gehäusewand 212 von oben einsetzbare Deckel 213 auf.

Der Halter 204 ist ein Drehteil mit einer unteren Drehplatte 214 und einer oberen Drehplatte 215 zwischen denen die Behälter 206 gehalten sind. Das Drehteil kann im Sinne einer fortlaufenden Rotation oder auch einer hin- und hergehenden Schwenkbewegung, vorzugsweise um etwa 360° angetrieben sein. Die Drehplatten 214, 215 sind durch ein sich vertikal erstrekkendes Verbindungsteil, hier ein Verbindungsrohr 217, fest miteinander verbunden, so daß sie das Verbindungsrohr 217 radial nach außen überragen und zwischen sich eine gemeinsame Ringausnehmung 218 oder einzelne Ausnehmung zur Aufnahme der Behälter 206 bilden. Vorzugsweise ist an der Oberseite der unteren Drehplatte 214 im Bereich jedes Stellplatzes 205 eine Führung 219 für den Behälter 206 vorgesehen, die eine radial nach innen verlaufende Bewegungsführung mit Bewegungsanschlag A beim Einsetzen des Behälters 6 von der Seite her zwischen die Drehplatten 214, 215 vorgibt. Die Führung 219 kann durch eine Vertiefung 221 mit einer ebenen Grundfläche 221a gebildet sein, deren sich in Umfangsrichtung erstreckende Breite an die Breite des vorzugsweise zylindrischen Behälters 206 angepaßt ist.

Wie insbesondere aus Fig. 25 zu entnehmen ist, wird die jeweils einem Stellplatz 205 zugeordnete Einstellvorrichtung 208 durch eine einstellbare Spannvorrichtung 223 gebildet. Bei der Ausgestaltung gemäß Fig. 24 und 25 wird die Spannvorrichtung 223 durch eine Spannschraube 224 gebildet, die von oben zugänglich in ein Gewindeloch der oberen Drehplatte 215 eingeschraubt ist. Das elastische Druckstück 222 ist auf dem Deckel 213 und zwischen letzterem und der Spannschraube 224 angeordnet. Das Druckstück 222 wird vorzugsweise durch ein hohlkegelförmiges Formstück gebildet, das in einer oberseitigen Ausnehmung des Deckels 213 angeordnet sein kann. Der Spannschraube 224 ist an ihrem oberen Ende ein Angriffselement 225 für ein Drehwerkzeug angeordnet. Durch entsprechendes Anziehen der Spannschraube 224 läßt sich das Ventil 207 so einstellen, daß es bei einem wahlweisen Behälter-Innendruck öffnet und abbläst.

Das topfförmige Gehäuse 209 vorzugsweise in hängender Position im Halter 204 gehalten. Hierzu dient beim vorliegenden Ausführungsbeispiel ein hülsenförmiger Ständer 226, hier in Form eines zylindrischen Rohres, in dem das Gehäuse 209 von oben eingesetzt ist und mit einem an seinem oberen Ende angeordneten Gehäuseflansch aufliegt. Mit Ausnahme seines oberen Endbereichs ist der Innendurchmesser des Ständers 226 größer bemessen als der Außendurchmesser des Gehäuses 209, so daß dazwischen ein Umfangsspalt 5 vorhanden ist. Die Höhe des Ständers 226 ist größer bemessen als das Gehäuse 209, so daß der Gehäuseboden in der eingehängten Position einen Abstand von der unteren Drehplatte 214 aufweist. Die untere Drehplatte 214 weist an jedem Stellplatz 205 koaxial eine insbesondere vertikale Durchgangsbohrung 227 auf. Unterhalb der inneren Stufenfläche 228 des Ständers 226 sind in letzterem mehrere auf den Umfang verteilt angeordnete Durchgangslöcher 29 vorgesehen, die vorzugsweise von innen nach außen schräg aufwärts verlaufen. Der Zweck der Durchgangslöcher 227,229 wird weiter unten noch erklärt. Der Ständer 226 kann einen gelochten Boden aufweisen.

Dem Halter 204 ist ein hohlzylindrisches Schutzgehäuse 231 zugeordnet, das so groß bemessen ist, daß es die Drehplatten 214, 215 mit einem kleinen radialen Abstand umgibt, wobei es auf dem Boden 232 des Heizraums 203 aufliegt, und wobei seine Höhe an die Höhe des Halters 204 etwa angepaßt ist.

Zwischen der unteren Drehplatte 214 und der oberen Drehplatte 215 und dem Schutzgehäuse 231 ist jeweils eine Dichtung 233 vorgesehen, die eine durch das Drehen oder Schwenken des Halters 204 hervorgerufene Relativbewegung zwischen dem Halter 204 und dem Schutzgehäuse 231 ermöglicht. Bei der vorliegenden Ausgestaltung sind Dichtungsringe 234a, 234b vorgesehen, die von unten oder oben auf die zugehörige Drehplatte 214, 215 aufgeschoben sind, an einer Schulterfläche 235 anliegen und gegen Längsverschieben durch einen Sicherungsstift oder -splint 236 gesichert sind.

Bei der vorliegenden Ausgestaltung ist der Halter 204 auf drei auf dem Umfang gleichmäßig verteilt angeordneten Rädern 237 dreh- oder schwenkbar gelagert, die in der unteren Drehplatte 214 drehbar gelagert sind und deren Unterseite nach unten überragen, so daß zwischen dem Boden 232 und der unteren Drehplatte 214 ein Abstand 238 vorhanden ist.

Am unteren Ende des Schutzgehäuses 231 ist unterhalb des unteren Dichtungsrings 234a ein radiales Durchgangsloch 239 vorgesehen.

Das Schutzgehäuse 231 ist durch eine formschlüssig wirksame Zapfenverbindung 241 gegen ein Mitdrehen durch den Halter 204 arretiert. Hierzu kann im Boden 232 eine Ausnehmung 242 vorgesehen sein, in die ein unterseitig vorspringender Zapfen 243 des Schutzgehäuses 231 formschlüssig einfaßt.

Das Schutzgehäuse 231 besteht vorzugsweise aus zwei Halbschalen 231a, 231b (Fig. 26), die durch eine oder zwei weitere. Zapfenverbindungen 244 mit wenigstens einem an der einen Halbschale angeordneten Zapfen und wenigstens einer an der anderen Halbschale passend angeordneten, den Zapfen aufnehmenden Ausnehmung aneinander in der Paßstellung arretierbar sind. Vorzugsweise weist das Schutzgehäuse 231 an seinem unteren Ende einen ggf. viereckigen Flansch 245 auf, der bei einer zweiteiligen Ausführung ebenfalls in der axialen Teilungsfuge 246 geteilt ist. Die Zapfen der Zapfenverbindung 243, 244 können durch einschraubbare Schrauben gebildet sein.

Im Schutzgehäuse 231 ist im oberen Bereich, d.h. jedoch unterhalb des oberen Dichtungsringes 234 ein radiales Anschlußloch 247 oder ein Anschlußstutzen angeordnet, das durch einen Schlauch 248 mit einer außerhalb des Heizraums 203 angeordneten Saugpumpe 249 verbunden ist. Der Schlauch 248 durchsetzt das Heizraumgehäuse 251 in einem abgedichteten Durchgangsloch 251a.

Es ist im Heizraumgehäuse 251 ein Lufteinlaß 252 angeordnet, der durch eine Mehrzahl kleiner Löcher gebildet sein kann. Es ist möglich, mehrere auf dem Umfang verteilt angeordnete Durchgangslöcher 239 und Lufteinlässe 252 vorzusehen.

Für einen Aufschluß von in die Behälter 206 eingefüllten Probematerialien wird der nicht dargestellte Mikrowellengenerator des Heizgerätes 202 und der Drehantrieb für den durch einen Rotor gebildeten Halter 204 eingeschaltet. Dabei erfolgt eine gleichmäßige Erhitzung aller Behälter 206 und des darin befindlichen Proben materials. Bei dieser Behandlung entstehen in den Behältern hauptsächlich auf Verdampfung beruhende Überdrücke und hohe Temperaturen. Da normalerweise durch die Mikrowellen nur das Probenmaterial erwärmt werden soll, wählt man als Materialien für den Halter 204, die Behälter 206 und das Schutzgehäuse 231 mikrowellendurchlässiges Material, vorzugsweise Kunststoff, so daß die betreffenden Teile durch die Mikrowellen nicht erwärmt werden. Für das Gehäuse 209 und den Deckel 213 bedarf es außerdem eines sehr korrosionsbeständigen Materials, das gegen bei der Aufbereitung entstehende Säuren des Probenmaterials resistent ist, vorzugsweise Polytetrafluorethylen (PTFE/Teflon) oder Tetrafluormischpolymerisat (TFM) oder auch Quarz, Keramik oder Glas für das Gehäuse 209.

Es ist möglich und ggf. auch vorteilhaft, das Gehäuse 209 und/oder den Deckel oder einen das Gehäuse 209 umgebenden Mantel aus einem Werkstoff, insbesondere Kunststoff zu fertigen, der Mikrowellen geringfügig absorbiert und deshalb bei Mikrowellenbestrahlung eine Eigenwärme erzeugt, die das Aufheizen unterstützt und außerdem Kondensatbildung im Behälter 206 vermeiden kann.

Während der Erhitzung entstehen in den Behältern solche hohen Temperaturen, bei denen ein verwendeter Kunststoff, z.B. PTFE, seine Festigkeit vermindert. Diesem Problem könnte durch größere Wandungsdicken begegnet werden, was jedoch zu größeren Bauweisen und größeren Herstellungskosten führt, weil die verwendeten Werkstoffe teuer sind.

Das vorbeschriebene Festigkeitsproblem des verwendeten Kunststoffs stellt sich nicht nur für die Behälter 206 sondern auch für das Schutzgehäuse 231 und den Halter 204, insbesondere für die obere Drehplatte 215, die durch die Vorspannung des elastischen Druckstücks 222 einer Belastung unterliegt, die sie nach oben zu biegen sucht. Die Verwendung eines hochtemperaturfesten Kunststoffes für den Halter 204 würde zu kaum vertretbaren hohen Herstellungskosten führen.

Dieses Problem wird durch die erfindungsgemäße Kühleinrichtung 210 gelöst. Ggf. gleichzeitig mit dem Einschalten der Mikrowelle wird der Antrieb für die Saugpumpe 249 eingeschaltet, wodurch diese einen Kühlluftstrom 253 erzeugt, der am Lufteinlaß 252 in den Heizraum 203 eintritt, sich quer durch den Heizraum 203 zu der oder den radialen Durchgangslöchem 229, den Abstand 238, die Durchgangslöcher 227, den Umfangsspalt S, die radialen Durchgangslöcher 229 und den zwischen dem Halter 204 und dem Schutzgehäuse 231 vorhandenen Ringfreiraum 254 zum Schlauch 248 und zur Saugpumpe 249 hin erstreckt, von dem nach außen abgeblasen wird. Der Luffströmungsweg ist in Fig. 2 durch Pfeile verdeutlicht. Der Kühlstrom 253 für die anderen Behälter 206 verläuft entsprechend. Durch diese Luftströmung werden die Gehäuse 209 in ihrem unteren Bereich vollflächig gekühlt, wobei die vom Luftstrom aufgenommene Wärme abgeführt wird. Es ist von Vorteil, den Gehäuseboden 211 halbkugelförmig zu formen. Hierdurch ergibt sich eine störungsfreie vorteilhafte Verteilung des Luftstroms zum Umfangsspalt S hin.

Es ist ggf. vorteilhaft, die Kühleinrichtung 210 erst nach einer gewissen Zeit nach Abschaltung des Mikrowellengenerators abzuschalten. Bei der vorbeschriebenen erfindungsgemäßen Kühleinrichtung 210 erfolgt somit gleichzeitig eine Kühlung des Halters 204 mit seinen Einzelteilen, des Schutzgehäuses 231 und der Behälter 206, wobei es sich bei letzteren um eine Außenkühlung handelt.

Das vorbeschriebene Festigkkeitsproblem des Kunststoffs bei Betriebstemperatur gilt auch für den Deckel 213. Deshalb ist diesem ein Stabilisator zugeordnet, hier in Form einer oberen Deckelscheibe 213a, die zwischen der unteren Deckelscheibe 213b und dem elastischem Druckstück 222 angeordnet ist. Die obere Deckelscheibe 213a besteht aus einem Kunststoff höherer Festigkeit als die Festigkeit der unteren Deckelscheibe 213b. Die obere Deckelscheibe 213a ist vorzugsweise in einer Ausnehmung der unteren Deckelscheibe 213b eingesetzt.

## Patentansprüche

1. Vorrichtung zum Verdampfen von insbesondere flüssigen Stoffen, vorzugsweise Reagenzstoffen, oder zum Aufbereiten bzw. Analysieren von Probenmaterial, **mit mehreren Behältern (6),**
- die jeweils aus einem Topf (23) und einem Deckel (24) **bestehen,** mit
- einem durch Mikrowellen wirksamen Heizgerät (2),
- einem Halter (4) im Heizraum (3) des Heizgeräts (2) für **die** Behälter (6),
**wobei jeder der Behälter (6)** mit einer Leitung (38a, 38b, 63) verbunden ist, die sich **in Form eines Kanals (38a, 38b)** durch den Deckel (24) und **in Form einer mit jedem der Kanäle (38a, 38b) verbundenen gemeinsamen Leitung (63)** durch den Heizraum nach außen, aus dem Heizraum heraus erstreckt,
- wobei der Halter (4) um eine vertikale Drehachse drehbar gelagert und durch einen Antrieb drehbar ist,
- und wobei in der Leitung (38a, 38b, 63) eine Drehverbindung **(83)** mit einer vertikalen Drehachse vorgesehen ist,
- die bei einer Drehung des Halters (4) eine kontinuierliche Zuführung und/oder Abführung durch die Leitung (38a, 38b, 63) gewährleistet.

2. Vorrichtung nach Anspruch 1,
**dadurch gekennzeichnet,**
**daß** die Drehverbindung zentral angeordnet ist.

3. Vorrichtung nach Anspruch 2,
**dadurch gekennzeichnet,**
**daß** die gemeinsame Leitung (63) mit einem Anschlußstück (64) verbunden ist, das in einem Drehlagerloch (84) des Halters (4) drehbar gelagert ist, und daß die Leitung (63, 63a, 38a, 38b) sich durch den Halter (4) zu den Behältern (6) erstreckt.

4. Vorrichtung nach einem der vorherigen Ansprüche,
**dadurch gekennzeichnet,**
**daß** die Leitung (63, 63a, 38a, 38b) lösbare Leitungsverbindungen (43; 45) im Umfangsbereich der Behälter (6) aufweist, die durch die Einstellbewegung beim Einstellen der Behälter (6) in den Halter (4) oder durch die Herausnahmebewegung beim Herausnehmen der Behälter (6) aus dem Halter (4) durch koaxiale Relativverschiebung oder Parallelverschiebung von Leitungsverbindungsabschnitten (23c) geschaffen bzw. getrennt wird.

5. Vorrichtung nach Anspruch 3 oder 4,
**dadurch gekennzeichnet,**
**daß** der Halter (4) mehrere Standplätze für Behälter (6) um seine Drehachse verteilt aufweist und von der gemeinsamen Leitung (63) im Bereich der Drehverbindung Leitungszweige (63a) abzweigen, die sich zu den Behältern (6) erstrecken.

6. Vorrichtung nach Anspruch 5,
**dadurch gekennzeichnet,**
**daß** die Leitungszweige den Deckel (24) mit winkelförmigen Kanälen (38a, 38b) radial durchsetzen und an der Unterseite der Deckel (24) austreten.

## Claims

1. Device for the evaporation of in particular liquid substances, preferably reagents, or for the preparation or analysis of sample material, having a plurality of containers (6)
- which each comprise a pot (23) and a lid (24), having
- a heating appliance (2) effective by means of microwaves,
- a holder (4) in the heating chamber (3) of the heating appliance (2) for the containers (6),
- each of the containers (6) being connected to a line (38a, 38b, 63) which extends in the form of a channel (38a, 38b) through the lid (24) and in the form of a common line (63), connected with each of the channels (38a, 38b), through the heating chamber (3) to the outside, out of the heating chamber,
- the holder (4) being mounted rotatably around a vertical axis of rotation and being rotatable by means of a drive,
- and there being provided in the line (63) a rotatable connection (83) having a vertical axis of rotation,
- which rotatable connection, upon rotation of the holder (4), ensures a continuous supply and/or discharge through the line (38a, 38b, 63).

2. Device according to claim 1,
**characterised in that**,
the rotatable connection is arranged centrally.

3. Device according to claim 2,
**characterized in that**,
the common line (63) is connected with a connector piece (64) which is rotatably mounted in a rotationbearing hole (84) of the holder (4), and **in that** the line (63, 63a, 38a, 38b) extends through the holder (4) to the containers (6).

4. Device according to any preceding claim,
**characterised in that**,
the line (63, 63a, 38a, 38b) has in the peripheral region of the containers (6) releasable line connections (43; 45) which are established by the insertion movement on insertion of the containers (6) into the holder (4) or severed by the removal movement on removal of the containers (6) from the holder (4) as a result of coaxial relative displacement or parallel displacement of line connection portions (38a, 38b; 23c).

5. Device according to claim 3 or 4,
**characterized in that**,
the holder (4) has a plurality of positioning places for containers (6) distributed around its axis of rotation and there branch off from the common line (63), in the region of the rotatable connection, line branches (63a) which extend to the containers (6).

6. Device according to claim 5,
**characterised in that**,
the line branches radially penetrate the lid (24) with angled channels (38a, 38b) and emerge at the underside of the lid (24).

## Revendications

1. Dispositif pour le traitement par évaporation de substances en particulier liquides, de préférence de substances réactives, ou pour préparer ou analyser des échantillons, comprenant plusieurs récipients (6),
- qui comportent chacun une cuve (23) et un couvercle (24),
- un appareil de chaufffage (2) qui agit par micro-ondes,
- un support (4) à l'intérieur de la chambre de chauffage (3) de l'appareil de chauffage (2) pour au moins un récipient (6),
chaque récipient (6) étant relié à une conduite (38a, 38b, 63), qui s'étend à travers le couvercle (24) sous la forme d'un canal (38a, 38b) et à travers la chambre de chauffage sous la forme d'une conduite (63) commune reiliée à chacun des canaux (38a, 38b), hors de ladite chambre de chauffage,
- le support (4) étant monté tournant autour d'un axe de rotation vertical et pouvant être entraîné en rotation par un mécanisme d'entraînement,
- et une liaison tournante avec un axe de rotation vertical étant prévue dans la conduite (63),
- laquelle liaison tournante, lors de la rotation du support (4), assure une alimentation et/ou une évacuation continue à travers la conduite (63).

2. Dispositif selon la revendication 1, **caractérisé par le fait que** la liaison tournante est disposée de manière cnetrale.

3. Dispositif selon la revendication 2, **caractérisé par le fait que** la conduite (63) est reliée à un élément de raccordement (64) qui est monté tournant dans un trou de palier (84) du support (4) et **par le fait que** la conduite (63) s'étend à travers le support (4) en direction du récipient (6).

4. Dispositif selon une des revendications précédentes, **caractérisé par le fait que** la conduite (63) comporte une liaison (43; 45) séparable dans la région périphérique du récipient (6), qui est établie ou coupée par déplacement relatif coaxial ou parallèle des tronçons de conduite (38a; 38b; 38c) par le mouvement de mise en place du récipient (6) dans le support (4) ou par le mouvement de retrait du récipient (6) du support (4).

5. Dispositif selon la revendication 3 ou 4, **caractérisé par le fait que** le support (4) comporte plusieurs emplacements pour des récipients (6) répartis autour de son axe de rotation et que des branches de conduites (63a) partent de la conduite (63), dans la région de la liaison tournante et s'étendent en direction des récipients (6).

6. Dispositif selon la revendication 5, **caractérisé par le fait que** les branches de conduite traversent radialement le couvercle (24) par des tronçons de branche de conduite (38a, 38b) et débouchent sur le côté inférieur du couvercle (24).
